# FASCICULE DE BREVET EUROPEEN

(11) **EP 2 964 445 B1**
(45) Date de publication et mention de la délivrance du brevet: **01.02.2017**
(21) Numéro de dépôt: 14708257.2
(22) Date de dépôt: 06.03.2014
(51) Int. Cl.: B29C 49/42, B29C 49/06, B29L 31/00, B29L 22/00, B25J 15/00, B65G 47/90, B29K 67/00

(54) **DISPOSITIF DE TRANSPORT D'UN CORPS CREUX COMPORTANT DES MOYENS DE PRÉHENSION PERFECTIONNÉS**
VORRICHTUNG ZUM TRANSPORT EINES HOHLKÖRPERS MIT VERBESSERTEN GREIFMITTELN
DEVICE FOR TRANSPORTING A HOLLOW BODY COMPRISING IMPROVED GRASPING MEANS

(30) Priorité: 07.03.2013 FR 1352054
(43) Date de publication de la demande: 13.01.2016
(73) Titulaire: Sidel Participations, 76930 Octeville-sur-Mer (FR)
(72) Inventeur: MORIN, Stéphane, F-76930 Octeville Sur Mer (FR); BLANCHARD, José, F-76930 Octeville Sur Mer (FR)
(74) Mandataire: Siloret, Patrick
(86) Numéro de dépôt international: PCT/EP2014/054332
(87) Numéro de publication internationale: WO 2014/135631

(56) Documents cités:
- EP-A1- 1 880 825
- WO-A2-2011/001358
- US-A- 4 082 175
- US-A1- 2005 092 892

## Description

La présente invention concerne un dispositif de transport d'un corps creux comportant des moyens de préhension perfectionnés.

La présente invention concerne plus particulièrement un dispositif de transport d'un corps creux muni d'un col qui comporte une paroi interne cylindrique d'orientation verticale et un bord supérieur délimitant circonférentiellement une ouverture d'accès à l'intérieur dudit corps creux, ledit dispositif comportant au moins des moyens de préhension du corps creux par coopération avec la paroi interne du col qui sont montés à l'extrémité libre inférieure d'une tige et liés en déplacement à la tige, ladite tige étant montée mobile verticalement entre :
- une position haute dans laquelle les moyens de préhension sont escamotés vers le haut par la tige pour permettre l'introduction radiale du col du corps creux dans une position déterminée de référence par rapport aux moyens de préhension du dispositif, et
- une position basse dans laquelle les moyens de préhension coopèrent radialement avec la paroi interne du col pour assurer la préhension du corps creux.

On connaît de l'état de la technique des dispositifs de transport comportant des moyens pour la préhension d'un corps creux muni d'un col, en particulier pour la préhension d'un corps creux en matière thermoplastique tel qu'une préforme ou un récipient (bouteille, flacon, pot, etc.).

Pour la préhension par le col de tels corps creux, on distingue notamment deux types de moyens de préhension, d'une part les moyens de préhension qui coopèrent principalement avec l'extérieur du col et, d'autre part, les moyens de préhension coopèrent seulement avec l'intérieur du col du corps creux.

Selon cette distinction, les moyens de préhension du dispositif selon l'invention sont du deuxième type, c'est à dire des moyens de préhension qui tiennent le corps creux par l'intérieur du col par coopération avec la seule paroi interne cylindrique du col, l'extérieur du col étant libre et dégagé.

En laissant l'extérieur du col libre et dégagé, les moyens de préhension du deuxième type autorisent en particulier la préhension du col par d'autres moyens de préhension, notamment aux fins d'un transfert du corps creux.

A titre d'exemple non limitatif, de tels autres moyens consistent par exemple en des pinces dont les mors coopèrent avec l'extérieur du col, notamment avec un filetage externe ou une gorge annulaire en fonction du type de col. Les mors sont par exemple reçus dans une gorge annulaire du col adjacente à une collerette radiale, ladite gorge étant de manière connue destinée à recevoir ultérieurement une bague d'inviolabilité après le bouchage du récipient final.

Le document WO-00/48819 décrit un exemple de dispositif de transport comportant des moyens de préhension du premier type, document auquel on se reportera pour plus de détails.

Par comparaison avec un dispositif de transport selon le premier type, la préhension du corps creux par l'intérieur du col avec des moyens de préhension d'un dispositif du deuxième type est souvent plus difficile à mettre en oeuvre. De plus, la paroi interne du col est lisse ce qui limite les possibilités de coopération avec des moyens de préhension.

L'un des problèmes rencontrés demeure la fiabilité de la préhension qui résulte de la coopération par friction des moyens de préhension avec la paroi interne. Les moyens de préhension selon l'état de la technique sont en particulier très sensibles aux tolérances dimensionnelles existant sur le diamètre interne du col du corps creux.

Le document EP-1.880.825 décrit un exemple de dispositif de transport d'un corps creux comportant des moyens de préhension du deuxième type qui sont aptes à en assurer la préhension par l'intérieur du col.

Les moyens de préhension comportent des billes qui, destinées à coopérer avec la paroi interne, sont sollicitées radialement vers l'extérieur par des anneaux toriques déformables élastiquement, lesdits anneaux étant interposés radialement entre un noyau central et les billes agencées en périphérie.

Dans ce document, les moyens de préhension présentent à l'état libre, avant leur introduction à l'intérieur du col, un diamètre externe qui est supérieur au diamètre interne du col.

Les moyens de préhension sont agencés à l'extrémité inférieure d'une tige et sont liés en déplacement à la tige, ladite tige étant montée mobile verticalement entre une position haute et une position basse.

La préhension est obtenue en descendant la tige vers le col pour y emmancher à force les moyens de préhension, le contact avec le col sollicitant les billes qui provoquent une déformation élastique desdits des anneaux toriques.

La libération est obtenue en remontant la tige et en exerçant au moyen d'un éjecteur un effort de poussée de sens opposé sur le bord (ou buvant) du col de la préforme pour en extraire lesdits moyens de préhension.

En raison notamment du procédé de moulage par injection des préformes et des sources d'approvisionnement souvent différentes, y compris parfois pour la fabrication d'un même récipient, le diamètre interne des cols présente souvent dans la réalité une grande variabilité qui engendre des problèmes en particulier lors de préhension du col (opération encore appelée «vêtissage»).

Les moyens de préhension selon ce document ont avantageusement permis d'améliorer la fiabilité grâce à l'utilisation de billes qui limitent les efforts de friction lors de l'introduction (ou de l'extraction) des moyens de préhension à l'intérieur du col.

Toutefois même si les tolérances aux variations du diamètre interne du col ont été significativement améliorées par rapport à l'art antérieur, ces tolérances demeurent parfois insuffisantes et des problèmes surviennent alors au cours de la préhension notamment.

Le fonctionnement des moyens de préhension du dispositif de transport selon cet état de la technique ne donne donc pas entière satisfaction.

Le document WO2014 / 001358 décrit un autre exemple de dispositif de transport d'un corps creux comportant des moyens de préhension du deuxième type qui sont aptes à en assurer la préhension par l'intérieur du col. Une tige est équipée de poussoirs. Chaque poussoir est monté sur un bras élastique pour se déplacer radialement. Comme dans l'art antérieur précité, la préhension est dépendante du diamètre intérieur du col. L'introduction des moyens de préhension dans le col engendre un effort de résistance axial.

Dans une installation de fabrication de récipients à partir de préformes, les conséquences économiques de ces problèmes étant particulièrement importantes (rebus, dégradations des moyens de chauffage dans le four, perturbations voir arrêts de l'installation de fabrication, etc.), on recherche encore et toujours des solutions pour accroître les tolérances des moyens de préhension aux variations des diamètres internes des cols des corps creux.

Le but de la présente invention est notamment de proposer un dispositif de transport d'un corps creux dont les moyens de préhension présentent une plus grande tolérance aux variations des diamètres internes des cols, tout en conservant l'ensemble des avantages de rapidité et de simplicité du fonctionnement du dispositif de transport selon l'état de la technique.

Dans ce but, l'invention propose un dispositif de transport d'un corps creux muni d'un col du type décrit précédemment, caractérisé en ce que les moyens de préhension sont montés mobiles radialement entre :
- une position rétractée dans laquelle les moyens de préhension sont introduits verticalement de haut en bas à l'intérieur du col, sans contact avec la paroi interne, et
- une position déployée dans laquelle les moyens de préhension coopèrent avec la paroi interne du col,
et en ce que le changement de position des moyens de préhension depuis la position rétractée vers la position déployée est commandé par le déplacement vertical vers le bas de la tige, de la position haute vers la position basse.

Avantageusement, le déplacement de la tige commandant le changement de position depuis la position rétractée vers la position déployée est de même sens que celui de l'introduction des moyens de préhension à l'intérieur du col, soit verticalement vers le bas, de la position haute à la position basse.

Pour la préhension, l'introduction des moyens de préhension et la commande du changement de position depuis la position rétractée vers la position déployée sont obtenus suivant un même déplacement vertical de la tige de la position haute vers la position basse.

Réciproquement pour la libération, l'extraction des moyens de préhension hors du col et la commande du changement de position des moyens de préhension depuis la position déployée vers la position rétractée sont obtenus suivant un même déplacement vertical vers le haut de la tige.

Grâce à la commande du changement de position des moyens de préhension par le déplacement de la tige, les moyens de préhension occupent - lors de leur introduction à l'intérieur du col - une position rétractée dans laquelle lesdits moyens présentent un diamètre externe qui est inférieur au diamètre intérieur du col de la préforme.

Avantageusement, l'introduction à l'intérieur du col des moyens de préhension s'effectue donc sans effort, sans contact avec la paroi interne.

Par comparaison, dans l'état de la technique, les moyens de préhension étaient en contact avec la paroi interne pendant toute la course d'introduction résultant de la descente de la tige. En effet, le col sollicite les billes à l'encontre des anneaux toriques déformables élastiquement pour provoquer la réduction du diamètre externe, puisque ce diamètre externe est initialement supérieur au diamètre interne du col.

Les anneaux toriques ont un rôle essentiel dans le fonctionnement de l'état de la technique EP-1.880.825.

Selon un premier cas de figure ("col étroit"), la déformation des anneaux toriques peut - en raison du diamètre interne du col et des tolérances sur ce dernier - être insuffisante pour que les moyens de préhension puissent être introduits verticalement totalement à l'intérieur du col. Un tel défaut de préhension du col peut avoir différentes conséquences.

Tout d'abord, ce défaut conduit à un positionnement incorrect de la préforme dont l'axe ne s'étend pas verticalement mais avec une inclinaison donnée et cela en raison notamment de l'absence de coopération de la butée de l'embase avec le bord du col et du contact rotulant des billes avec la paroi interne.

Dans le cas d'un dispositif de transport individuel de préforme équipant un four, le corps d'une préforme ainsi inclinée est alors susceptible de provoquer des dommages en entrant en contact avec les moyens de chauffage, tels que des lampes infrarouges.

Ensuite, même si la préforme s'étend verticalement, la position verticale du col est alors incorrecte par rapport à des moyens de préhension destinés à se saisir du col ou, pour reprendre l'exemple d'application précité dans un four, induit un positionnement incorrect du col par rapport des moyens de refroidissement et/ou de protection du col, et cela vaut également pour le corps par rapport aux moyens de chauffage du four.

Selon un deuxième cas de figure ("col large"), si en raison du diamètre interne du col et des tolérances sur ce dernier, la déformation des anneaux toriques est insuffisante alors l'effort appliqué par les billes sur la paroi interne du col peut l'être également. Un tel défaut de préhension du col peut là encore avoir différentes conséquences.

Par exemple, l'entraînement en rotation sur elle-même de la préforme lors du conditionnement thermique de son corps peut être perturbé en cas de glissement entre les billes et la paroi interne pour reprendre l'exemple précité d'application du dispositif de transport à un four.

Le dispositif de transport selon l'invention résout avantageusement ces problèmes rencontrés parfois avec un dispositif selon l'état de la technique EP-1.880.825 tout en en conservant cependant les caractéristiques de fonctionnement et ce faisant la rapidité et la simplicité, en particulier pour effectuer la préhension du col.

En effet, la commande de changement de la position des moyens de préhension du dispositif selon l'invention est obtenue simultanément à la fin du déplacement vertical de la tige en direction du col. La préhension est obtenue automatiquement en un seul et même déplacement de la tige en direction du col.

Avantageusement, après l'escamotage des moyens de préhension verticalement vers le haut, le corps creux et le dispositif de transport sont susceptibles de se positionner relativement l'un par rapport à l'autre afin que le corps creux occupe une position déterminée de référence dans laquelle le col est aligné verticalement par rapport aux moyens de préhension, suivant l'axe principal du dispositif de transport.

Par comparaison avec l'état de la technique, les moyens de préhension sont commandés sélectivement au moyen de la tige pour occuper l'une des positions rétractée ou déployée, les moyens de préhension étant commandés vers leur position déployée par le déplacement vertical vers le bas de la tige.

Avantageusement, la libération d'un corps creux orienté « col en haut » est obtenue simplement par gravité, en effet la remontée de la tige commande le retour des moyens de préhension vers la position rétractée, libérant ainsi le corps creux jusqu'alors suspendu par son col.

Grâce à la commande des moyens de préhension, l'éjecteur peut avantageusement être supprimé.

Selon d'autres caractéristiques de l'invention :
- le dispositif comporte un corps par rapport auquel la tige, dite de commande, est montée mobile verticalement, au moins un organe de rappel vertical de la tige de commande vers sa position basse et des moyens d'actionnement de la tige de commande vers sa position haute à l'encontre dudit organe de rappel ;
- le dispositif comporte une pièce intermédiaire de support des moyens de préhension qui est liée en déplacement à la tige de commande et qui est montée mobile verticalement par rapport à la tige de commande, et un organe intermédiaire de rappel vers le bas de ladite pièce intermédiaire ;
- l'organe de rappel de la tige de commande et l'organe intermédiaire de rappel de la pièce intermédiaire sont montés en série par l'intermédiaire d'un élément d'appui et le tarage de l'organe de rappel de la tige de commande est supérieur au tarage de l'organe intermédiaire de rappel de la pièce intermédiaire ;
- le dispositif comporte des moyens de butée qui déterminent un débattement vertical entre la pièce intermédiaire et la tige de commande ;
- le dispositif comporte au moins des premiers moyens de butée qui interviennent pour lier en déplacement la pièce intermédiaire à la tige de commande lorsque la tige de commande est déplacée verticalement vers le haut ;
   -- la pièce intermédiaire comporte une butée de commande apte à provoquer un déplacement relatif vers le haut de la pièce intermédiaire par rapport à la tige de commande à l'encontre de l'organe intermédiaire de rappel.
- la pièce intermédiaire comporte une butée de commande apte à coopérer avec le bord du col pour provoquer un déplacement relatif vers le haut de la pièce intermédiaire par rapport à la tige de commande, à l'encontre de l'organe intermédiaire de rappel ;
- l'organe intermédiaire de rappel de la pièce intermédiaire est apte à exercer verticalement vers le bas un effort d'assistance sur le bord du col ;
- le dispositif comporte des moyens de verrouillage des moyens de préhension en position déployée ;
- le dispositif comporte au moins des deuxièmes moyens de butée qui, lorsque la tige de commande est déplacée verticalement vers le bas, interviennent entre la pièce intermédiaire en butée et la tige de commande pour positionner verticalement lesdits moyens de verrouillage ;
- la pièce intermédiaire comporte une butée apte à coopérer avec une face d'un support pour provoquer un déplacement relatif vers le haut de la pièce intermédiaire par rapport à la tige de commande, à l'encontre de l'organe intermédiaire de rappel ;
- le dispositif comporte un éjecteur portant une face d'appui destinée à coopérer avec le bord du col pour immobiliser le col verticalement vers le haut lorsque la tige de commande est déplacée verticalement vers le haut ;
- le dispositif comporte une butée qui, mobile à l'encontre d'un ressort de rappel vers le bas, est apte à coopérer avec la pièce intermédiaire pour immobiliser verticalement ladite pièce intermédiaire lorsque la tige de commande est déplacée verticalement vers le haut ;
- la tige de commande comporte une surface de commande qui, lors du déplacement vertical de la tige vers le bas, coopère avec les moyens de préhension pour provoquer un déplacement radial des moyens de préhension de la position rétractée vers la position déployée ;
- les moyens de préhension comportent au moins des moyens de transmission, au moins un organe élastique radialement déformable et des éléments de préhension du corps creux comportant une surface externe destinée à coopérer en position déployée avec la paroi interne du col ;
- les moyens de transmission comportent au moins des billes qui, lors du changement de position des moyens de préhension vers la position déployée, coopèrent avec la surface de commande de la tige et lesdites billes sont reçues dans une gorge de la tige de commande formant lesdits moyens de verrouillage des moyens de préhension en position déployée ;
- ledit au moins un organe élastique radialement déformable est un ressort ondulé destiné à solliciter radialement les éléments de préhension et les moyens de transmission comportent un anneau qui est interposé radialement entre les billes et ledit ressort ;
   -- ledit au moins un élément élastique radialement déformable est une bague annulaire en matière élastomère qui est interposée radialement entre les moyens de transmission et les éléments de préhension ;
   -- les éléments de préhension du corps creux sont formés par une bague qui, formée d'au moins deux secteurs, est réalisée dans un matériau métallique ;
- les moyens de préhension sont formés par des patins comportant radialement à l'intérieur une face inclinée qui est destinée à coopérer avec la surface de commande de la tige de commande
- lesdits patins formant les moyens de préhension et la tige de commande sont aimantés pour rappeler automatiquement les patins vers la position rétractée.

D'autres caractéristiques et avantages de la présente invention apparaîtront à la lecture de la description détaillée qui va suivre pour la compréhension de laquelle on se reportera aux dessins dans lesquels :
- la figure 1 est une vue en coupe verticale qui représente un exemple de corps creux muni d'un col et illustre selon cet exemple une préforme ainsi que, en trait pointillé, la silhouette d'un récipient (bouteille) susceptible d'être fabriqué à partir d'une telle préforme en matière thermoplastique ;
- la figure 2 est une vue en perspective qui représente un dispositif de transport comportant des moyens de préhension selon un premier mode de réalisation de l'invention ;
- les figures 3 à 8 sont des vues en coupe qui représentent un dispositif selon la figure 2 et qui illustrent les positions de fonctionnement successivement occupées pour réaliser la préhension puis la libération d'un corps creux muni d'un col tel qu'une préforme ou un récipient selon la figure 1 ;
- les figures 9 et 10 sont respectivement une vue en coupe radiale et une vue en éclaté qui représentent en détail les moyens de préhension selon le premier mode de réalisation ;
- les figures 11 à 14 sont des vues en coupe qui représentent un dispositif de transport qui, similaire à celui du premier mode de réalisation, comporte une variante de réalisation des moyens de préhension et qui illustrent les positions de fonctionnement successivement occupées pour réaliser la préhension puis la libération d'un corps creux muni d'un col tel qu'une préforme ou un récipient selon la figure 1 ;
- les figures 15 et 16 sont respectivement une vue en coupe radiale et une vue en éclaté qui représentent en détail la variante de réalisation des moyens de préhension du premier mode de réalisation selon laquelle les moyens de préhension comportent un anneau élastique ;
- les figures 17 à 23 sont des vues en coupe qui représentent un dispositif de transport selon un deuxième mode de réalisation qui, sans éjecteur, comporte des moyens de préhension identiques au premier et qui illustrent les positions de fonctionnement successivement occupées pour réaliser la préhension puis la libération d'un corps creux muni d'un col tel qu'une préforme ou un récipient selon la figure 1 ;
- les figures 24 à 28 sont des vues en coupe qui représentent un dispositif de transport selon un troisième mode de réalisation et qui illustrent les positions de fonctionnement successivement occupées pour réaliser la préhension puis la libération d'un corps creux muni d'un col tel qu'une préforme ou un récipient selon la figure 1 ;
- les figures 29 et 30 sont respectivement des vues en coupe radiale qui représentent en détail les moyens de préhension selon le troisième mode de réalisation et qui illustrent respectivement lesdits moyens de préhension en position rétractée et en position déployée à l'intérieur d'un col.

Dans la suite de la description, on adoptera à titre non limitatif et pour en faciliter la compréhension les orientations « verticale » suivant l'axe X du dispositif et « radiale » orthogonalement audit axe, l'orientation « verticale » étant donnée par convention sans référence aucune à la gravité terrestre.

On utilisera à titre non limitatif les termes « haut » ou « bas » ainsi que « supérieur » ou « inférieur » en référence à l'orientation verticale, et « extérieur / externe » ou « intérieur / interne » en référence à l'orientation radiale et par rapport à l'axe O pour le dispositif de transport ou l'axe A pour le corps creux.

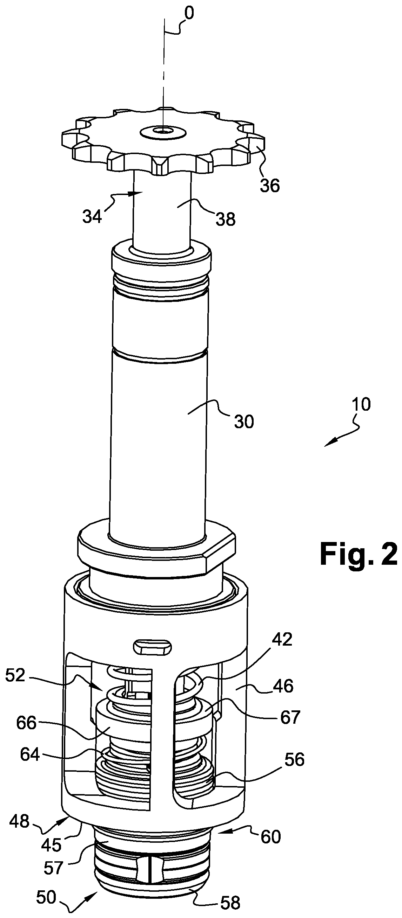

Les figures 2 à 10 représentent un dispositif 10 de transport d'un corps creux selon un premier mode de réalisation de l'invention.

Un dispositif 10 de transport selon l'invention est en particulier utilisé pour transporter individuellement un corps creux formé par une préforme 12 dans un four (non représenté) d'une installation de fabrication de récipients.

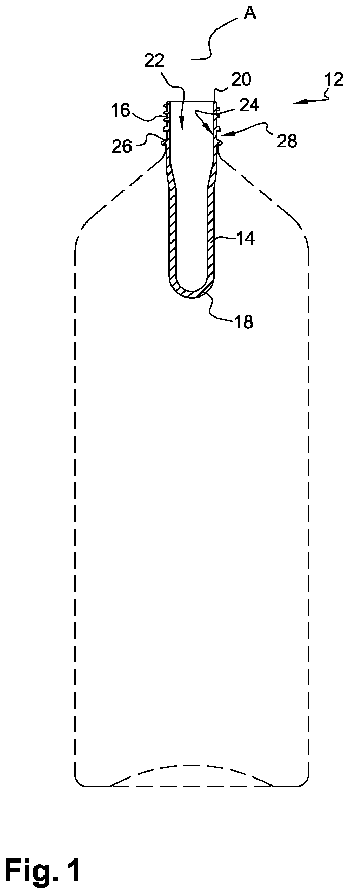

On a représenté à la figure 1 en coupe verticale, un exemple non limitatif de réalisation d'une préforme 12 en matière thermoplastique destinée à être transformée en un récipient, tel qu'une bouteille représentée en trait pointillé.

La préforme 12 en matière thermoplastique comme le PET est par exemple conditionnée thermiquement dans le four de l'installation, et cela préalablement à sa transformation en récipient réalisée par soufflage (ou étirage-soufflage) de ladite préforme dans un moule au moyen d'au moins un fluide sous pression.

On rappelle qu'une préforme 12 est généralement fabriquée par injection de matière thermoplastique dans un moule et que la préforme 12 obtenue comporte un col à sa forme définitive, c'est à dire identique à celui du récipient final.

Par conséquent, un dispositif 10 de transport est apte à assurer indifféremment, pour un col donné, la préhension de la préforme 12 comme celle du récipient final, grâce à quoi le dispositif 10 de transport selon l'invention peut être utilisé dans l'ensemble d'une telle installation.

Ainsi qu'on l'aura compris, l'utilisation d'un dispositif 10 de transport selon l'invention n'est donc nullement limitée à celui d'une préforme, de surcroît pas à celui de préformes dans un four qui ne constituent respectivement qu'un exemple.

Tel que représenté sur la figure 1, la préforme 12 comporte un corps 14 muni à une extrémité d'un col 16 et fermé à l'extrémité opposée par un fond 18. La préforme 12 présente un axe A principal qui s'étend ici selon la direction verticale.

Le col 16 comporte un bord 20 qui délimite circonférentiellement une ouverture 22 d'accès à l'intérieur du corps 14 creux de la préforme 12 et comporte une paroi 24 interne. Sur la figure 1, ladite paroi 24 interne est cylindrique et s'étend verticalement de manière rectiligne avec un diamètre interne sensiblement constant.

En variante, la paroi 24 interne du col 16 est légèrement inclinée par rapport à la verticale et/ou la paroi 24 interne est étagée, avec une variation du diamètre interne.

Dans l'exemple de réalisation représenté à la figure 1, le col 16 comporte une collerette 26 qui s'étend radialement vers l'extérieur, en saillie par rapport au corps 14, et qui délimite verticalement une zone de jonction du col 16 avec le corps 14.

Selon cet exemple, le col 16 comporte à l'extérieur un filetage destiné à permettre la fermeture ultérieure du récipient par un bouchon à vis complémentaire et comporte encore une gorge 28 annulaire destinée à recevoir une bague d'inviolabilité.

Dans le cas de l'application particulière au transport d'une préforme 12 dans le four d'une installation de fabrication de récipients, le col 16 ayant sa forme définitive, seul le corps 14 de la préforme 12 est chauffé par des moyens de chauffage en vue d'en ramollir la matière constitutive.

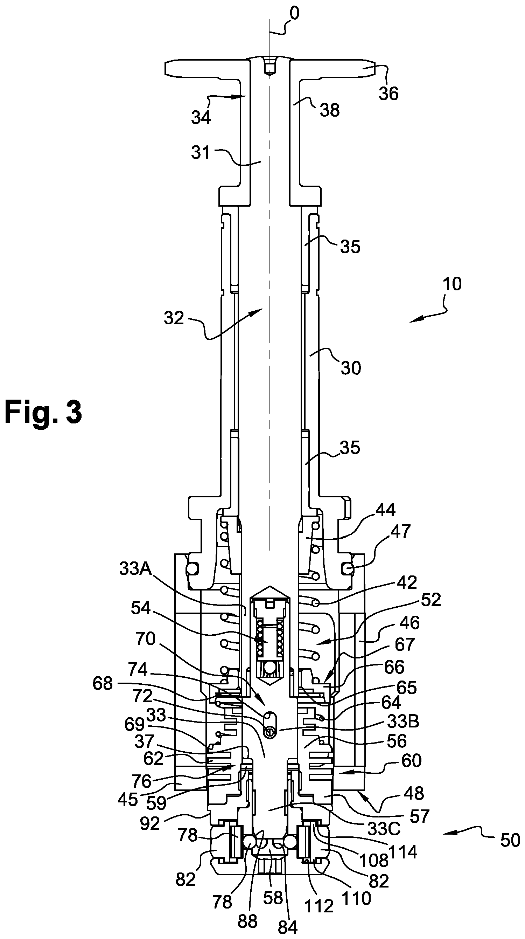

Tel que représenté notamment sur les figures 2 et 3, le dispositif 10 de transport comporte un corps 30, notamment apte à être lié en déplacement à un système de transport, tel qu'une chaîne ou une courroie, de manière à être entraîné pour effectuer un parcours de chauffe déterminé à l'intérieur du four.

Le dispositif 10 de transport comporte au moins une tige 32, dite de commande, qui est montée mobile verticalement par rapport au corps 30 suivant l'axe O du dispositif 10 de transport.

Le dispositif 10 de transport comporte une pièce 34 d'entraînement de la tige 32 de commande.

La pièce 34 d'entraînement est traversée centralement par une portion 31 supérieure de la tige 32 qui, de section inférieure à celle de la partie de la tige 32 coulissant verticalement dans le corps 30, délimite un épaulement pour ladite pièce 34 d'entraînement.

La pièce 34 d'entraînement est liée en déplacement à ladite tige 32, d'une part verticalement et, d'autre part, en rotation autour de l'axe O principal du dispositif de transport.

Avantageusement, des coussinets 35 sont interposés entre le corps 30 et la tige 32, respectivement à chaque extrémité supérieure et inférieure du corps 30.

La pièce 34 d'entraînement présente globalement en coupe verticale une forme en « T » et comporte respectivement une partie d'orientation radiale à partir de laquelle s'étend vers le bas une autre partie d'orientation verticale.

La partie radiale est formée par un pignon 36 comportant circonférentiellement une denture destinée à coopérer avec des moyens d'engrènement complémentaires pour entraîner la tige 32 en rotation autour de l'axe O.

Le pignon 36 a pour fonction, par l'intermédiaire de la tige 32, d'entraîner en rotation sur elle-même de la préforme 12 transportée individuellement par le dispositif 10.

Une telle fonction trouve notamment application dans le four d'une installation de fabrication de récipients et est destinée à améliorer le conditionnement thermique de la préforme 12 qui est ainsi entraînée sur elle-même à l'intérieur du four sur au moins une partie du parcours de chauffe. Subsidiairement, c'est la raison pour laquelle un tel dispositif 10 de transport est parfois également appelé « tournette ».

La partie verticale 38 de la pièce 34 d'entraînement de la tige 32 forme un moyeu qui est destiné à coopérer avec des moyens 40 d'actionnement associés.

Les moyens 40 d'actionnement sont destinés à commander sélectivement le déplacement vertical de la tige 32 de commande, ladite tige 32 étant montée coulissante par rapport au corps 30.

Les moyens 40 d'actionnement de la tige 32 comportent par exemple une fourchette qui coopère avec le moyeu 38 pour le déplacer verticalement et qui est commandé sélectivement à cet effet par un actionneur, tel qu'un mécanisme à came et à galet.

Dans les figures, les moyens 40 d'actionnement de la tige 32 sont représentés schématiquement par une flèche et uniquement lorsque la tige 32 est déplacée verticalement vers le haut et/ou vers le bas par lesdits moyens 40.

Avantageusement, la tige 32 est montée mobile verticalement suivant l'axe O entre au moins une première position, dite position basse, et une deuxième position, dite position haute.

De préférence, la tige 32 est montée mobile verticalement vers le haut à l'encontre d'un organe 42 de rappel de la tige formé par exemple ici par un ressort.

En fonction de l'effort appliqué par les moyens 40 d'actionnement sur le moyeu 38 de la pièce 34 d'entraînement, le ressort 42 rappelle automatiquement la tige 32 de commande vers la position basse.

Les moyens 40 d'actionnement commande seulement le déplacement vertical de la tige 32 de la position basse vers la position haute, en exerçant sur la tige 32 un effort de traction supérieur à l'effort de rappel exercé par le ressort 42.

Avantageusement, le déplacement vertical vers le bas de la tige 32, de la position haute vers la position basse, est obtenu u automatiquement grâce au ressort 42 de rappel de la tige en cessant d'appliquer sur la pièce 34 d'entraînement ledit effort de traction.

En variante, en l'absence d'un tel ressort 42 de rappel de la tige 32, les moyens 40 d'actionnement commandent alors le déplacement vertical de la tige 32 vers l'une et l'autre desdites positions basse et haute.

Le ressort 42 de rappel de la tige s'étend verticalement autour de la tige 32 qui le traverse centralement, l'extrémité supérieure du ressort 42 est en appui sur une bague 44 également traversée par la tige 32. La bague 44 est immobilisée verticalement vers le haut par rapport au corps 30, ladite bague 44 étant ici en appui sur le coussinet 35 inférieur.

Le dispositif 10 de transport comporte un éjecteur 46 dont l'extrémité supérieure est rapportée à fixation sur le corps 30, par exemple ici par emboîtement élastique au moyen d'un joint 47.

L'éjecteur 46 comporte à son extrémité inférieure un bord 45 circonférentiellement continu qui comporte une face 48 d'appui, ladite face 48 d'appui étant avantageusement plane et s'étendant radialement.

La face 48 d'appui de l'éjecteur 46 est destinée à coopérer avec au moins une partie du bord 20 du col 16 et qui intervient lors de la libération de la préforme 12.

Avantageusement, l'éjecteur 46 est une pièce facilement et rapidement démontable pour être le cas échéant changé, notamment pour la mise en fabrication d'un autre récipient dont le col présente des caractéristiques différentes de diamètre.

Le dispositif 10 de transport comporte des moyens de préhension désignés d'une manière générale par la référence 50 et destinés à coopérer avec la paroi 24 interne pour assurer la préhension du corps creux par l'intérieur du col 16, ici la préhension individuelle de la préforme 12.

Tel qu'illustré sur la figure 2, l'éjecteur 46 est une pièce cylindrique qui, localement ajourée, délimite un logement 52 à l'intérieur duquel sont reçus tout ou partie des moyens 50 de préhension du dispositif 10 de transport.

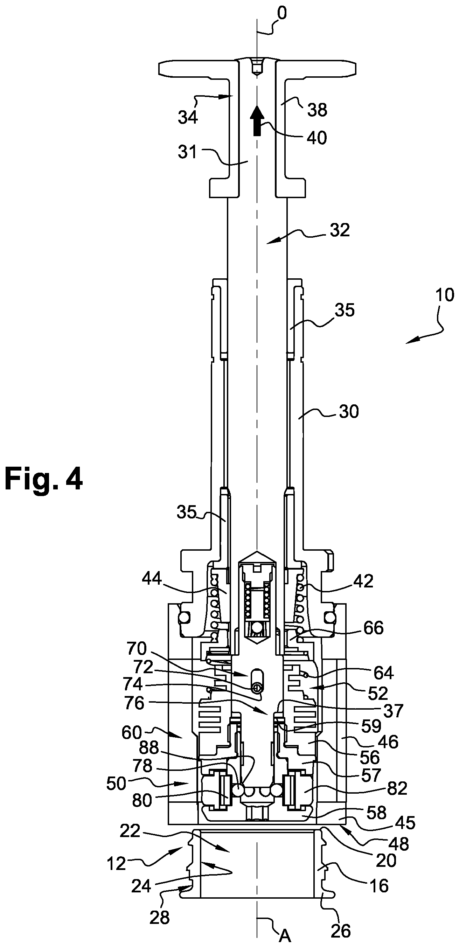

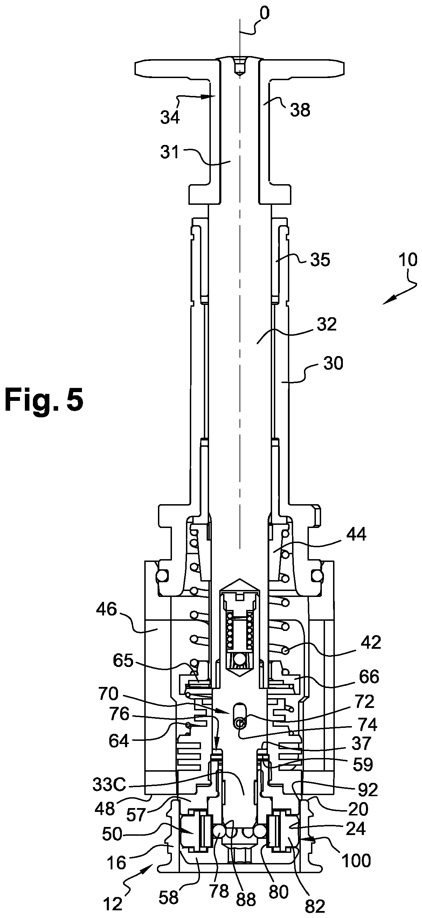

En fonction de la position verticale de la tige 32, les moyens 50 de préhension sont escamotés à l'intérieur du logement 52 (figure 4) ou font partiellement saillie, verticalement au-delà de la face 48 d'appui de l'éjecteur 46 (figures 3 ou 5).

Les moyens 50 de préhension sont montés à l'extrémité inférieure de la tige 32 de commande et sont liés verticalement en déplacement à la tige 32 avec une possibilité de débattement donné selon la direction verticale.

Les moyens 50 de préhension sont entraînés verticalement vers le haut par la tige 32 de commande déplacée vers sa position haute, l'escamotage des moyens 50 de préhension a notamment pour but de permettre l'introduction radiale du col 16 de la préforme 12 dans une position déterminée de référence par rapport au dispositif 10 de transport et plus particulièrement par rapport auxdits moyens 50 de préhension.

La position déterminée de référence du col 16 correspond à une position dans laquelle le col 16 est aligné verticalement par rapport aux moyens 50 de préhension, l'axe A de la préforme 12 étant avantageusement confondu avec l'axe O principal du dispositif 10 de transport.

La préforme 12 étant dans ladite position de référence et orientée dans une position dite "col en haut" dans laquelle le corps 14 s'étend verticalement en dessous du col 16, le col 16 est alors placé verticalement en dessous, à l'aplomb des moyens 50 de préhension.

Grâce à l'escamotage des moyens 50 de préhension, le col 16 peut être amené pour occuper ladite position de référence sans qu'il n'y ait d'interférences entre le col 16 et les moyens 50 de préhension.

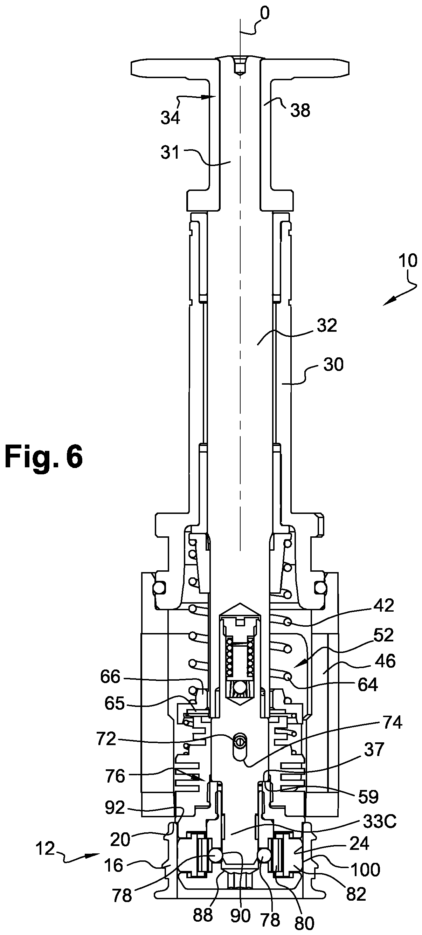

Tel qu'illustré sur la figure 6, le bord 20 du col 16 est dans ladite position déterminée de référence avantageusement situé à proximité de la surface 48 d'appui de l'éjecteur 46.

Avantageusement, les courses verticales de la tige 32 pour réaliser tant la préhension que la libération de la préforme 12 par les moyens 50 de préhension en sont parallèlement réduites.

En position basse de la tige 32, les moyens 50 de préhension coopèrent radialement avec la paroi 24 interne du col 16 pour assurer la préhension de la préforme 12.

De préférence, la tige 32 est réalisée en deux parties, respectivement une première partie comportant la portion supérieure 31 qui demeure montée dans le corps 30 du dispositif 10 de transport et une deuxième partie 33 inférieure.

Avantageusement, la deuxième partie 33 inférieure est amovible de manière à permettre un changement des moyens 50 de préhension en fonction des caractéristiques du col 16 du corps creux dont la préhension doit être réalisée.

La partie 33 inférieure de la tige 32 est étagée et comporte respectivement un tronçon 33A supérieur, un tronçon 33B intermédiaire et un tronçon inférieur 33C.

De préférence, des moyens 54 de liaison permettent de réaliser, rapidement et simplement, le démontage comme le montage de moyens 50 de préhension sur le dispositif 10 de transport.

Avantageusement, la partie inférieure (encore appelée "nez de tournette") comportant fonctionnellement les moyens 50 de préhension du col 16, est ainsi la seule partie à changer.

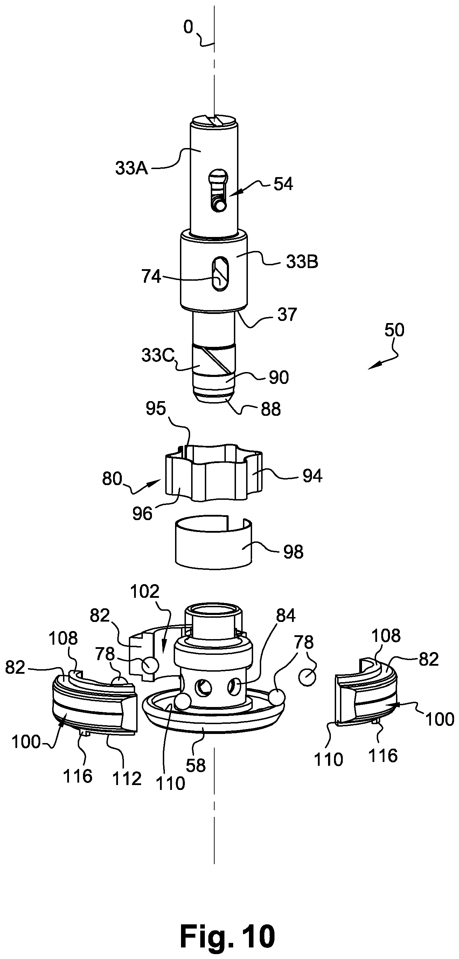

Les moyens 54 de liaison sont par exemple ici du type à baïonnette, lesdits moyens 54 de liaison étant portés par le tronçon 33A de la partie inférieure de la tige 32 (voir figure 10).

Les tronçons 33A et 33C présentent une section inférieure à celle du tronçon 33B intermédiaire, un épaulement 37 étant formé à la jonction entre le tronçon 33B intermédiaire et le tronçon 33C inférieur.

Conformément à l'invention, les moyens 50 de préhension sont montés mobiles radialement entre :
- une position rétractée dans laquelle les moyens 50 de préhension sont introduits verticalement de haut en bas à l'intérieur du col 16, sans contact avec la paroi 24 interne, et
- une position déployée dans laquelle les moyens 50 de préhension coopèrent avec la paroi 24 interne du col 16,
et le changement de position des moyens 50 de préhension depuis la position rétractée vers la position déployée est commandé par le déplacement vertical vers le bas, de la position haute à la position basse, de la tige 32, dite tige de commande.

Avantageusement, les moyens 50 de préhension sont susceptibles d'occuper des positions déployée ou rétractée qui sont des positions commandées sélectivement par le déplacement de la tige 32, ledit déplacement verticalement vers le bas correspondant au sens d'introduction des moyens 50 de préhension à l'intérieur du col 16.

Par comparaison, les moyens de préhension selon l'état de la technique ne sont pas montés mobiles radialement entre deux positions commandées sélectivement.

En effet, les moyens de préhension selon l'état de la technique sont susceptibles d'occuper deux états, un premier état libre occupé hors du col et un deuxième état comprimé occupé à l'intérieur du col.

Dans le premier état libre occupé hors du col, les moyens de préhension présentent un diamètre externe qui est supérieur au diamètre interne du col. Dans le deuxième état comprimé occupé à l'intérieur du col, les moyens de préhension coopèrent avec la paroi interne du col suite à leur déformation, provoquée par le col, lors de leur emmanchement en force par la tige à l'intérieur dudit col.

Avantageusement, le déplacement vertical vers le bas de la tige 32 pour commander le changement de position des moyens 50 de préhension de la position rétractée vers la position déployée s'effectue dans le même sens que celui de l'introduction des moyens 50 de préhension à l'intérieur du col 16.

Grâce à quoi, le déplacement vertical vers le bas de la tige 32 qui introduit les moyens 50 de préhension à l'intérieur du col 16 et qui commande en fin de course le changement de position desdits moyens 50 de préhension, et cela quasi simultanément à leur introduction, est un déplacement continu.

De la même manière, le déplacement vertical vers le haut de la tige 32 commande le changement de position des moyens 50 de préhension de la position déployée vers la position rétractée pour effectuer la libération de la préforme 12.

Le dispositif 10 comporte au moins une pièce intermédiaire de support des moyens 50 de préhension qui est portée par la tige 32, plus précisément la partie inférieure 33, et montée mobile verticalement avec un débattement donné par rapport à la tige 32 de commande.

Par convention, ladite au moins une pièce intermédiaire est désignée ci-après par la référence générale 60. De préférence, ladite au moins une pièce 60 intermédiaire est réalisée en plusieurs parties.

La pièce 60 intermédiaire comporte par exemple dans ce premier mode de réalisation trois parties, une partie 56 supérieure, une partie 58 inférieure et une partie 57 formant entretoise qui est interposée verticalement entre lesdites parties supérieure 56 et inférieure 58.

La partie 57, ci-après l'entretoise, assure la liaison entre lesdites parties supérieure 56 et inférieure 58 qui sont verticalement solidaires en déplacement l'une de l'autre.

L'entretoise 57 est traversée verticalement par le tronçon 33C inférieur de la tige 32 et comporte un bord supérieur délimitant une face 59 de butée.

Avantageusement, la partie 56 supérieure comporte des moyens 62 de dissipation thermique, tels que des ailettes, pour évacuer vers l'air la chaleur transmise aux moyens 50 de préhension lorsqu'ils sont utilisés pour le transport d'une préforme 12 à l'intérieur d'un four de conditionnement thermique.

La pièce 60 intermédiaire, ici par la partie 56 supérieure, est montée mobile verticalement par rapport à la tige 32 de commande à l'encontre d'un organe 64 élastique intermédiaire de rappel.

L'organe 64 intermédiaire de rappel de la pièce 60 est interposé verticalement entre ladite partie 56 supérieure de la pièce 60 intermédiaire et un élément 66 d'appui.

De préférence, l'élément 66 d'appui est réalisé sous la forme d'une coupelle qui est traversée centralement par la tige 32 et libre verticalement de se déplacer par rapport à la tige 32.

La coupelle 66 est sollicitée en permanence verticalement vers le bas par le ressort 42 contre une butée 65 inférieure qui est par exemple formée par un anneau élastique fendu solidaire de la tige 32.

Avantageusement, la coupelle 66 d'appui est interposée verticalement entre le ressort 42 de rappel de la tige 32 de commande et l'organe 64 intermédiaire de rappel de ladite pièce 60.

Le tarage du ressort formant l'organe 42 de rappel de la tige 32 de commande est supérieur au tarage de l'organe 64 intermédiaire de rappel de la pièce 60 intermédiaire.

L'organe 64 intermédiaire de rappel de ladite pièce 60 est par exemple constitué par un ressort à spirales et sera désigné ci-après le ressort 64 intermédiaire.

La coupelle 66 d'appui est respectivement sollicitée par l'extrémité inférieure du ressort 42 de rappel de la tige 32 de commande qui est en appui sur une face 67 supérieure de la coupelle 66 et par l'extrémité supérieure du ressort 64 intermédiaire de rappel de la pièce 60 intermédiaire qui est en appui sur une face 68 inférieure opposée de la coupelle 66.

L'extrémité inférieure du ressort 64 intermédiaire de rappel de la pièce 60 intermédiaire est en appui sur un épaulement 69 que comporte la partie 56 supérieure de ladite pièce 60 intermédiaire.

Le dispositif 10 comporte des moyens de butée qui, intervenant entre la tige 32 de commande et la pièce 60 intermédiaire, détermine verticalement le débattement entre les deux pièces vers le haut et/ou vers le bas.

De préférence, lesdits moyens de butée comportent des premiers moyens 70 de butée qui, formant une butée basse, déterminent la position de la pièce 60 par rapport à la tige 32 de commande lorsque ladite tige 32 est déplacée verticalement vers le haut, vers sa position haute.

Les premiers moyens 70 de butée interviennent pour lier en déplacement la pièce 60 intermédiaire à la tige 32 de commande lorsque la tige 32 est déplacée verticalement vers le haut.

Le dispositif 10 comporte des moyens 72 de liaison en rotation de la partie 33 inférieure de la tige 32 de commande et de la pièce 60 intermédiaire, ici la partie 56 supérieure de la pièce 60 intermédiaire.

De préférence, les moyens 72 de liaison en rotation sont formés par une goupille qui traverse respectivement le tronçon 33B intermédiaire de la partie 33 inférieure de la tige 32 et la partie 56 supérieure de la pièce 60 intermédiaire.

Le tronçon 33B intermédiaire de la partie 33 inférieure de la tige 32 comporte un trou 74 qui est traversé à jeu par la goupille 72 de liaison en rotation et présente verticalement une forme oblongue.

De préférence, une extrémité inférieure du trou 74 forme par coopération avec la goupille 72 lesdits premiers moyens 70 de butée.

De préférence, lesdits moyens de butée comportent des deuxièmes moyens 76 de butée qui, formant une butée haute, déterminent la position de la pièce 60 par rapport à la tige 32 de commande lorsque ladite tige 32 est déplacée verticalement vers le bas pour la préhension du col 16 d'une préforme 12.

Les deuxièmes moyens 76 de butée sont formés par des moyens distincts de ceux formant les premiers moyens 70 de butée.

En variante, les deuxièmes moyens 76 de butée sont formés par la goupille 72 et le trou 74, la goupille 72 venant alors en butée contre le bord supérieur du trou 74 verticalement opposé au bord inférieur contre lequel la goupille 72 vient en butée pour former les premiers moyens 70 de butée.

De préférence, les deuxièmes moyens 76 de butée sont obtenus par la venue en butée de l'épaulement 37 de la partie 33 inférieure de la tige 32 contre la face 59 de butée formée par le bord supérieur de l'entretoise 57 dans la pièce 60 intermédiaire.

Lorsque la tige 32 de commande est déplacée verticalement vers le bas, les deuxièmes moyens 76 de butée interviennent entre la pièce 60 intermédiaire en butée et la tige 32 de commande, en particulier pour positionner verticalement des moyens 90 de verrouillage qui seront décrits ultérieurement.

On décrira maintenant les moyens 50 de préhension selon le premier mode de réalisation, qui sont plus particulièrement illustrés par les figures 4 et 5.

Les moyens 50 de préhension comportent, radialement de l'intérieur vers l'extérieur, au moins des moyens de transmission, des moyens 80 élastiques radialement déformables et des éléments 82 de préhension.

Les moyens de transmission comportent au moins des billes 78 qui sont réparties circonférentiellement de manière régulière et sont reçues dans des logements 84 formés dans la partie 58 inférieure de la pièce 60 intermédiaire.

La partie 58 inférieure forme une cage pour les billes 78.

De préférence, les billes 78 sont réalisées dans un matériau métallique, tel que de l'acier.

La partie supérieure d'orientation verticale de partie 58 inférieure comporte centralement un logement 86 dans lequel se déplace verticalement le tronçon 33C inférieur de la tige 32 de commande.

De préférence, le tronçon 33C inférieur de la tige 32 de commande comporte une surface 88 de commande destinée à coopérer avec les billes 78 pour les solliciter radialement vers l'extérieur, de la position rétractée vers la position déployée des moyens 50 de préhension.

Avantageusement, la surface 88 de commande portée par la tige 32 est une surface tronconique.

Avantageusement, le dispositif 10 comporte des moyens 90 de verrouillage en position des moyens 50 de préhension aptes à maintenir les moyens 50 de préhension dans la position déployée.

A défaut, l'effort de rappel exercé verticalement vers le bas par le ressort 64 intermédiaire de rappel de la pièce 60 intermédiaire provoquerait un changement de position des moyens 50 de préhension vers la position rétractée en raison du déplacement vers le bas de la pièce 60 intermédiaire par rapport à la tige 32.

Avantageusement, la pièce 60 intermédiaire, ici l'entretoise 57, comporte un épaulement formant une butée 92 de commande qui est destinée à coopérer avec au moins une partie du bord 20 du col 16.

Lorsque les moyens 50 de préhension sont déplacés verticalement vers le bas en direction du col 16 avec la tige 32 de commande, la butée 92 de commande vient en butée contre le bord 20 et provoque alors un déplacement relatif vers le haut de la pièce intermédiaire 60 par rapport à la tige 32 de commande et cela à l'encontre du ressort 64 intermédiaire de rappel de la pièce 60 intermédiaire.

Ce déplacement relatif s'effectue dans la limite du débattement déterminé par les deuxièmes moyens 76 de butée.

En réaction à la compression qui s'en suit, le ressort 64 intermédiaire sollicite la pièce 60 intermédiaire avec un effort de rappel orienté verticalement vers le bas.

De préférence, les moyens de verrouillage sont constitués une rainure 90 annulaire qui est réalisée dans le tronçon 33C inférieur de la tige 32 de commande, verticalement au dessus de la surface 88 tronconique de commande.

En variante, le dispositif 10 comporte des moyens de verrouillage commandés sélectivement pour immobiliser verticalement la tige 32 de commande dans sa position basse.

Dans ce premier mode de réalisation, les moyens 80 élastiques sont formés par un ressort annulaire qui, constitué d'une lame métallique, est circonférentiellement ondulé.

Le ressort 80 est ouvert et comporte un bord 95 à chacune de ses extrémités qui se rejoignent en vis à vis.

Le ressort 80 ondulé comporte circonférentiellement une alternance de portions 94 convexes et de portions 96 concaves formant respectivement des vagues, lesdites portions 94, 96 s'étendant respectivement par rapport à l'axe O vertical radialement vers l'extérieur et radialement vers l'intérieur.

Avantageusement, les moyens de transmission comportent un anneau 98 qui est interposé radialement entre les billes 78 et le ressort 80. L'anneau 98 est fendu pour lui permettre de se déformer, et en s'ouvrant plus ou moins de varier de circonférence en fonctionnement.

L'anneau 98 est respectivement en contact radialement à l'intérieur avec les billes 78 et à l'extérieur avec les portions 96 concaves du ressort 80. Les billes 78 sont alignées radialement sur les portions 94 convexes du ressort 80.

Les éléments 82 de préhension sont formés par une bague qui comporte radialement une face 100 externe destinée à coopérer avec la paroi interne 24 du col 16 en position déployée.

Avantageusement, la bague 82 est réalisée en métal, par exemple en inox (avantageusement insensible à la corrosion ou chimiquement à la présence de produit de stérilisation).

Le choix d'un matériau métallique permet également de limiter l'usure de la bague 82 bien que les frottements soient avantageusement limités (par comparaison avec l'état de la technique) en raison de la commande du changement de position des moyens 50 de préhension.

Par comparaison aux matériaux élastomères souvent utilisés dans l'art antérieur, l'utilisation de matériau métallique pour les moyens 50 de préhension supprime avantageusement tout risque de pollution de l'intérieur du corps creux par des particules d'élastomère.

Les moyens 50 de préhension selon l'invention permettent une plus grande longévité d'utilisation ce qui est un avantage économique, notamment en raison de leur nombre important dans un système de transport équipant par exemple un four d'une installation de fabrication de récipients.

De plus, les moyens 50 de préhension présentent un grande fiabilité de fonctionnement même dans des conditions d'utilisation à des températures élevées telles que celles rencontrées dans un four de conditionnement thermique de préformes 12.

Grâce à la commande du changement de position des moyens 50 de préhension, les risques de marquage du col 16 qui existaient auparavant avec l'état de la technique en raison de l'emmanchement à force sont supprimés.

Avantageusement, la bague 82 comporte une face 102 interne comportant des zones 104 en creux dans lesquelles sont reçues radialement les portions 94 convexes du ressort 80 grâce à quoi la rotation du ressort 80 est empêchée sans affecter sa déformation radiale.

De préférence, la bague 82 de préhension est réalisée en trois secteurs égaux disposés à 120° et qui, séparés par une fente 106, sont respectivement indépendants les uns des autres.

Avantageusement, la bague 82 est susceptible de rattraper des défauts de coaxialité entre le col 16 de la préforme 12 et les moyens 50 de préhension du dispositif 10.

Chaque secteur de la bague 82 comporte un rebord 108 supérieur et un rebord 110 inférieur qui sont reçus avec un jeu radial respectivement dans un logement 112 formé dans l'entretoise 57 et dans un logement 114 formé dans la partie 58 inférieure de la pièce 60 intermédiaire.

Avantageusement, les rebords 108, 110 forment une butée radiale pour chaque secteur de la bague 82 qui détermine la course maximale de déplacement vers la position déployée.

De préférence, le rebord 110 inférieur comporte un doigt 116 qui s'étend verticalement vers le bas en saillie à partir du rebord 110 pour bloquer en rotation le secteur de la bague 82 et/ou pour le guider radialement lors du déplacement entre les positions rétractée et déployée.

On décrira ci-après le fonctionnement du dispositif 10 de transport selon le premier mode de réalisation, plus précisément et en référence aux figures 3 à 8 : les étapes mises en oeuvre pour réaliser successivement la préhension (ou opération dite de « vêtissage ») d'un corps 12 creux par l'intérieur de son col 16 puis sa libération (ou opération dite de « dévêtissage »).

Le dispositif 10 de transport représenté à la figure 3 est dans une position de repos, à l'état libre, dans laquelle les moyens 50 de préhension occupent la position rétractée.

La tige 32 de commande est en position basse, le ressort 42 de rappel sollicite la tige 32 verticalement vers le bas par l'intermédiaire de la coupelle 66 d'appui qui est en butée contre l'anneau 65 solidaire de la tige 32.

La pièce 60 intermédiaire est sollicitée verticalement vers le bas par le ressort 64 intermédiaire de rappel.

En l'absence de col 16, la goupille 72 formant les premiers moyens 70 de butée est en appui contre l'extrémité inférieure du trou 74 et les billes 78 ne sont pas sollicitées radialement vers l'extérieur par la partie 33 inférieure de la tige 32.

Les premiers moyens 70 de butée interviennent, dans ladite position de repos, entre la pièce 60 intermédiaire et la tige 32 à l'encontre de l'organe 64 intermédiaire de rappel et déterminent la position verticale de la pièce 60 intermédiaire par rapport à la tige 32 de commande.

Dans cette position de repos du dispositif 10 de transport, il existe verticalement un jeu entre l'épaulement 37 de la tige 32 de commande et la face 59 de butée formant ensemble les deuxièmes moyens 76 de butée entre la tige 32 et la pièce 60 intermédiaire.

Le ressort 80 sollicite radialement les billes 78 vers l'intérieur, les moyens 50 de préhension occupent leur position rétractée pour laquelle le diamètre externe de la bague 82 est inférieur au diamètre interne du col 16 de la préforme 12.

Dans cette position de repos, les moyens 50 de préhension font saillie hors du logement 52 interne de l'éjecteur 46 et s'étendent verticalement au delà de la surface 48 d'appui.

La figure 4 représente le dispositif 10 de transport dans une première position de fonctionnement qui est obtenue à partir de la position de repos après une première étape.

Lors de la première étape, les moyens 40 d'actionnement représentés schématiquement par une flèche sont commandés pour agir sur le moyeu 38 de la pièce 34 d'entraînement afin de tirer sur la tige 32 pour la déplacer verticalement vers le haut.

Le déplacement vertical de la tige 32 jusqu'à la position haute s'effectue à l'encontre du ressort 64 de rappel de la tige 32, le ressort 64 est alors comprimé par l'intermédiaire de la coupelle 66 qui, en butée sur l'anneau 65, est solidaire en déplacement de la tige 32.

L'effort de traction exercé sur la pièce 34 d'entraînement de la tige 32 par les moyens 40 d'actionnement est supérieur à l'effort de rappel exercé par le ressort 42 de rappel sur la tige 32. La tige 32 est maintenue en position haute tant que l'effort de traction appliqué par les moyens 40 d'actionnement reste supérieur, à défaut la tige 32 est automatiquement rappelée verticalement vers le bas par le ressort 42 de rappel.

La première étape a pour conséquence d'escamoter les moyens 50 de préhension verticalement vers le haut, à l'intérieur du logement 52 interne de l'éjecteur 46, grâce à quoi le col 16 de la préforme 12 formant ledit corps creux est susceptible d'être mis en place sans interférence avec les moyens 50 de préhension.

Tout particulièrement, l'escamotage des moyens 50 de préhension autorise l'introduction radiale de la préforme 12 pour en amener le col 16 dans la position déterminée de référence pour laquelle ledit col 16 est aligné verticalement avec lesdits moyens 50 de préhension, à l'aplomb en vue de sa préhension par ces derniers.

Le col 16 est logé dans l'espace libéré par l'escamotage des moyens 50 de préhension, à proximité desdits moyens 50 de préhension comme de l'éjecteur 46.

Dans la position déterminée de référence, la préforme 12 est maintenue en position au moins jusqu'à ce que la préhension par les moyens 50 de préhension du dispositif 10 de transport soit effective.

De préférence, la préforme 12 est supportée par l'intermédiaire de sa collerette 26 radiale qui est en appui sur des moyens de support (non représentés) par exemple le pourtour de l'une des encoches d'une roue de transfert alimentant en préformes le four d'une installation de fabrication de récipients.

Les moyens 50 de préhension portés par la pièce 60 intermédiaire sont liés en déplacement à la tige 32, la goupille 72 coopérant avec le trou 74 pour former les premiers moyens 70 de butée, l'équipage mobile formé par la tige 32 et la pièce 60 intermédiaire coulisse verticalement vers le haut, entraîné par les moyens 40 d'actionnement.

Les premiers moyens 70 de butée interviennent pour lier en déplacement la pièce 60 intermédiaire à la tige 32 de commande lorsque la tige 32 est déplacée verticalement vers le haut.

Lors du déplacement vertical de la tige 32 vers sa position haute, les moyens 50 de préhension demeurent en position rétractée.

En effet, le ressort 64 intermédiaire de rappel sollicitant la pièce 60 intermédiaire verticalement vers le bas, les billes 78 ne sont pas sollicitées par la tige 32 décalée verticalement et sont rappelées radialement vers l'intérieur par le ressort 80.

Dans une deuxième étape illustrée aux figures 5 et 6, le col 16 de la préforme 12 occupant ladite position déterminée de référence, le dispositif 10 de transport est commandé pour réaliser la préhension de la préforme 12 par l'intérieur du col.

La préhension est obtenue en déplaçant la tige 32 verticalement vers le bas en direction du col 16 pour y introduire les moyens 50 de préhension en commandant leur changement de position de la position rétractée vers la position déployée.

Grâce au ressort 42 de rappel de la tige 32, la descente de la tige 32 de la position haute vers la position basse est obtenue automatiquement en cessant d'exercer l'effort de traction sur la tige 32, les moyens 40 d'actionnement sont commandés à cet effet de manière synchrone.

Lors de la descente verticale de la tige 32 vers la position basse, la butée 92 de commande formée par l'épaulement de la pièce 60 intermédiaire vient en butée contre le bord 20 du col 16 immobilisant alors la pièce 60 intermédiaire tandis que la tige 32 poursuit son déplacement verticalement vers le bas.

La butée 92 de commande est apte à coopérer avec le bord 20 du col 16 pour provoquer un déplacement relatif vers le haut de la pièce 60 intermédiaire par rapport à la tige 32 de commande, à l'encontre de l'organe 64 intermédiaire de rappel.

Plus précisément, la tige 32 de commande est susceptible de poursuivre sa descente par rapport à la pièce 60 intermédiaire dans la limite du débattement vertical qui est déterminé par les deuxièmes moyens 76 de butée.

Le débattement vertical entre la tige 32 et la pièce 60 intermédiaire qui est déterminé par les moyens 76 de butée correspond à la course de la tige 32 pour commande le changement de position des moyens 50 de préhension.

La figure 5 représente le dispositif 10 de transport à l'instant où la butée 92 de commande entre en contact avec le bord 20 du col 16 de la préforme 12.

La goupille 72 est toujours dans la même position que celle occupée sur la figure 4 et un jeu vertical subsiste entre l'épaulement 37 et la face 59 de butée.

Lorsque la butée 92 de commande vient en appui contre le bord 20, les moyens 50 de préhension sont alors introduits verticalement à l'intérieur du col 16 en position rétractée et correctement disposés pour en assurer la préhension.

Le diamètre externe de la bague 82 de préhension en position rétractée étant inférieur au diamètre interne du col 16, l'introduction s'effectue sans contact avec la paroi 24 interne du col 16.

Avantageusement, la butée 92 de commande réalisée sur le bord 20 permet de prendre une référence sur le col 16 et garantit le bon positionnement tant vertical que radial des moyens 50 de préhension à l'intérieur du col 16.

Sur la figure 5, il existe un jeu radial entre la face 100 externe des secteurs de la bague 82 et la paroi 24 interne du col 16 en vis-à-vis.

Une fois la pièce 60 intermédiaire en butée sur le col 16, la tige 32 poursuit alors seule son déplacement vertical vers le bas pour commander le changement de position des moyens 50 de préhension en atteignant la position basse représentée à la figure 6.

Le déplacement relatif de la tige 32 de commande par rapport à la pièce 60 intermédiaire s'effectue à l'encontre du ressort 64 intermédiaire de rappel de la pièce 60.

En effet, la pièce 60 intermédiaire étant immobilisée verticalement par le col 16, la coupelle 66 comprime alors le ressort 64 intermédiaire de rappel de la pièce 60.

En poursuivant sa course verticale vers le bas, la surface 88 tronconique de commande de la tige 32 de commande vient solliciter les billes 78 des moyens 50 de préhension à l'encontre du ressort 80 et provoquer le déplacement desdites billes 78 radialement vers l'extérieur.

Les billes 78 sont en appui sur l'anneau 98 qui transmet l'effort au ressort 80 par l'intermédiaire des portions 96 concaves, lequel ressort 80 sollicite alors radialement vers l'extérieur les secteurs de la bague 82 pour amener la surface 100 externe en contact avec la paroi 24 interne du col 16.

Les moyens 50 de préhension occupent alors la position déployée dans laquelle les secteurs de la bague 82 appliquent sur la paroi 24 interne un effort radial propre à en assurer la préhension par le dispositif 10 de transport.

Avantageusement, l'effort de préhension appliqué par les trois secteurs de la bague 82 via leur surface 100 externe est globalement circonférentiellement continu sur le pourtour de la paroi interne 24 du col 16.

Comme le ressort 64 intermédiaire de rappel a été comprimé lors de la fin de la descente de la tige 32, ce ressort 64 sollicite alors la pièce 60 intermédiaire verticalement vers le bas.

C'est l'une des raisons pour lesquelles, il est avantageusement prévu des moyens 90 de verrouillage pour verrouiller lesdits moyens 50 de préhension en position déployée.

De préférence, les billes 78 sont reçues dans la gorge 90 annulaire réalisée dans le tronçon 33C de la partie 33 inférieure de la tige 32 de manière à verrouiller les moyens 50 de préhension dans la position déployée.

Par comparaison entre les figures 5 et 6, lors de la fin de la descente de la tige 32, la goupille 72 quitte sa position en butée pour se déplacer verticalement vers le haut dans le trou 74, en direction de l'autre bord. La goupille 72 n'entre cependant ici pas en contact avec l'autre bord puisque les deuxièmes moyens 76 de butée sont de préférence réalisés ailleurs.

Ainsi, le jeu vertical présent sur la figure 5 entre l'épaulement 37 et la face 59 de butée n'existe plus sur la figure 6, l'épaulement 37 est en butée contre la face 59 et forment avantageusement les deuxièmes moyens 76 de butée qui déterminent la position de la tige 32 de commande par rapport à la pièce intermédiaire 60.

Pour la libération de la préforme 12 correspondant à une troisième étape, les moyens 40 d'actionnement sont à nouveau commandés pour agir sur la pièce 34 d'entraînement solidaire de la tige 32 afin de déplacer la tige 32 verticalement vers le haut, depuis la position basse de la figure 6 vers la position haute.

L'effort de traction exercé par les moyens 40 d'actionnement provoque par rapport au corps 30 le déplacement vers le haut de la tige 32 et entraîne celui de la pièce 60 intermédiaire et de la préforme 12 puisque, les moyens 50 de préhension étant en position déployée, la préforme 12 est tenue par l'intérieur de son col 16.

L'ensemble se déplace verticalement vers le haut jusqu'à ce que le bord 20 du col 16 viennent en appui contre la surface 48 d'appui de l'éjecteur 46 et immobilise verticalement la préforme 12.

Avantageusement, la butée 92 de commande de l'entretoise 57 ne s'étend radialement que sur une portion interne du bord 20 du col 16, laissant la portion externe libre de venir en butée contre la face 48 d'appui.

Cependant du fait de la coopération des moyens 50 de préhension avec la paroi 24 interne du col 16, la pièce 60 intermédiaire est également immobilisée ce qui provoque un déplacement relatif entre la pièce 60 intermédiaire et la tige 32 qui poursuit sa montée, entraînée par les moyens 40 d'actionnement.

Le déplacement de la tige 32 par rapport à l'éjecteur 46 solidaire du corps 30 se poursuit verticalement vers la position haute et l'effort de sens opposé appliqué par la face 48 d'appui sur le bord 20 provoque le déverrouillage des billes 78 qui sortent de la gorge 90 annulaire de la tige 32.

Les moyens 50 de préhension en position déployée et le col 16 forment alors un tout solidaire qui est immobilisé verticalement par l'appui en butée du bord 20 contre la face 48 d'appui de l'éjecteur 46.

Le ressort 64 intermédiaire de rappel sollicitant la pièce 60 intermédiaire verticalement vers le bas, la goupille 72 se déplace à nouveau dans le trou 74 pour venir en butée, la pièce 60 intermédiaire est alors solidaire en déplacement vertical de la tige 32 de commande.

Avantageusement, le ressort 64 intermédiaire de rappel exerce par l'intermédiaire de la pièce 60 intermédiaire un effort de poussée sur le bord 20 du col 16, plus précisément par l'intermédiaire de la partie 56 supérieure et de l'entretoise 57 comportant l'épaulement 92 qui coopère avec le bord 20.

L'effort de poussée appliqué par le ressort 64 est orienté verticalement vers le bas, ledit effort assiste par conséquent la libération du col 16 de la préforme 12.

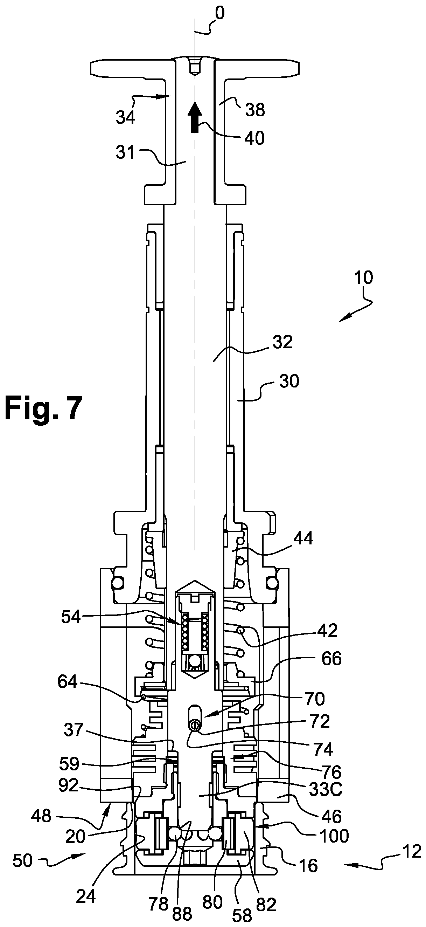

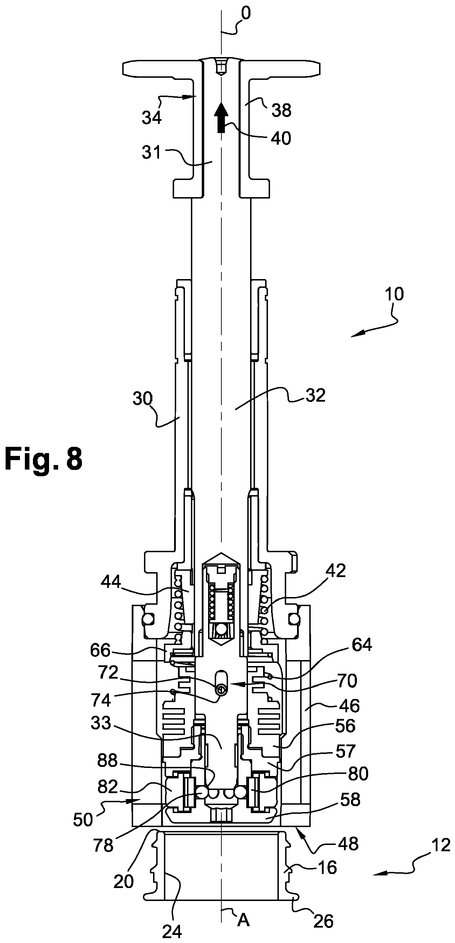

Comme on peut le voir sur les figures 7 et 8, il existe à nouveau un jeu vertical entre l'épaulement 37 et la face 59 qui forment les deuxièmes moyens 76 de butée.

Les billes 78 des moyens 50 de préhension ne sont plus sollicitées radialement vers l'extérieur par la tige 32 de commande qui s'est déplacée verticalement vers le haut par rapport à la pièce 60 intermédiaire et la bague 82 de préhension coopère toujours par la paroi 24 interne du col 16 de sorte que les moyens 50 de préhension ne peuvent se déplacer radialement que vers l'intérieur.

Le ressort 80 jusqu'alors comprimé en position déployée sollicite alors les billes 78 radialement vers l'intérieur par l'intermédiaire de l'anneau 98, les moyens 50 de préhension sont ainsi rappelé automatiquement de la position déployée vers la position rétractée.

Le rappel des moyens 50 de préhension vers la position rétractée provoque alors automatiquement la libération du col 16 de la préforme 12.

En position rétractée, le diamètre externe de la bague 82 est inférieur au diamètre interne de l'ouverture de passage délimitée circonférentiellement par de bord de l'éjecteur 46 comportant la face 48 d'appui. Les moyens 50 de préhension sont susceptibles d'être à nouveau escamotés verticalement vers le haut dans le logement 52 de l'éjecteur 46.

Selon l'orientation verticale désirée de la préforme 12, le dispositif 10 de transport est indifféremment apte à tenir le corps creux suspendu par son col (position dite « col en haut ») comme à le supporter (position dite « col en bas »).

Avantageusement, si la préforme 12 est orientée verticalement avec le col 16 au dessus du corps 14 (position dite « col en haut »), la gravité facilite la séparation de la préforme 12.

Tel que représenté sur la figure 8, la tige 32 de commande occupe alors sa position haute et le dispositif 10 de transport est apte à réaliser la préhension par l'intérieur du col 16 d'une nouvelle préforme 12 de manière identique à ce qui vient d'être décrit en référence aux figures 3 à 8.

Avantageusement, la préhension (ou « vêtissage ») d'une préforme 12 est par conséquent obtenue de manière simple en deux étapes successives, une première étape, dite d'armement, du dispositif 10 puis une deuxième étape, dite de relâchement, des moyens 50 de préhension commandés en direction du col 16.

Avantageusement, la commande des moyens 40 d'actionnement de la tige 32 est synchronisée avec l'introduction radiale du corps creux dans la position déterminée de référence par rapport au dispositif 10 de transport, l'introduction s'effectuant entre les première et deuxième étapes.

La libération (ou « dévêtissage ») est obtenue simplement grâce au rappel automatique des moyens 50 de préhension vers la position rétractée.

De plus, l'éjecteur 46 pourrait avantageusement être supprimé pour simplifier le dispositif 10 de transport, en particulier grâce à l'effort d'assistance appliqué par le ressort 64 intermédiaire de rappel sur le col 16 par l'intermédiaire de l'épaulement formant la butée 92 de commande et, le cas échéant, des forces de gravité.

Avantageusement, un tel dispositif 10 est particulièrement rapide en raison du fait que la préhension du corps creux par son col est obtenue simultanément à l'introduction, par la descente de la tige 32, des moyens 50 de préhension à l'intérieur du col 16 et la commande de leur changement de position.

De tels avantages sont particulièrement intéressants dans le cas d'une mise en oeuvre pour le transport de préformes au sein d'un four d'une installation de fabrication de récipients.

En effet, les préformes 12 sont généralement amenées en entrée du four par une roue de transfert à encoches qui est entraînée en rotation dans un sens opposé à celui du système de transport comportant des dispositifs 10 de transport agencés les uns à la suite des autres.

La préhension de la préforme 12 doit alors être réalisée dans un laps de temps d'autant plus court que la vitesse du système de transport, déterminée par les cadences de fabrication, est élevée.

Chaque préforme 12 supportée par sa collerette 26 radiale et amenée par la roue de transfert parcourt un secteur angulaire jusqu'à atteindre un « point de tangence » dans lequel le col 16 de la préforme 12 occupe ladite position déterminée de référence par rapport aux moyens 50 de préhension du dispositif 10 de transport.

La préhension du col 16 doit par conséquent être réalisée de manière synchrone à l'instant précis où la préforme 12 occupe ladite position pour laquelle son axe A est confondu avec l'axe O principal du dispositif 10 de transport.

Avantageusement et par comparaison avec l'état de la technique, la commande par la tige 32 du changement de position des moyens 50 de préhension permet de limiter tant à la préhension qu'à la libération les efforts appliqués radialement sur le col 16.

Lors de la préhension, il n'y a en effet pas de contact avec la paroi 24 interne dès lors que les moyens 50 de préhension occupent la position rétractée dans laquelle leur diamètre externe est inférieur au diamètre interne du col 16.

De même, lors de la libération, les moyens 50 de préhension étant rappelés automatiquement vers la position rétractée, l'effort appliqué sur le bord 20 du col 16 par la butée 92 de commande est un effort d'assistance à la libération.

Par comparaison, un tel effort d'assistance est très inférieur à l'effort appliqué auparavant dans l'état de la technique pour extraire hors du col les moyens de préhension qui y avaient été préalablement emmanchés en force.

De tels avantages du dispositif 10 de transport selon l'invention sont d'autant plus déterminants que la recherche permanente de réduction du coût de fabrication des récipients, dans lequel la matière thermoplastique (PET, etc.) tient une place prépondérante, conduit à avoir des préformes dont les cols allégés sont de plus en plus fins et donc fragiles.

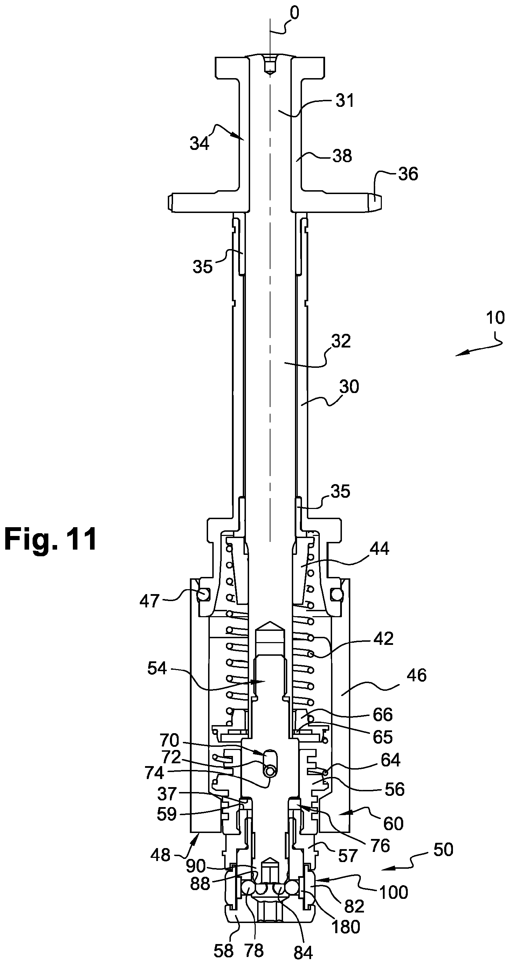

On a représenté aux figures 11 à 16 une variante de réalisation du premier mode de réalisation.

Les figures 11 à 14 illustrent les positions successives du dispositif 10 de transport lors des étapes pour réaliser la préhension puis la libération d'un corps 12 creux muni d'un col 16, tel qu'une préforme ou un récipient représenté à la figure 1.

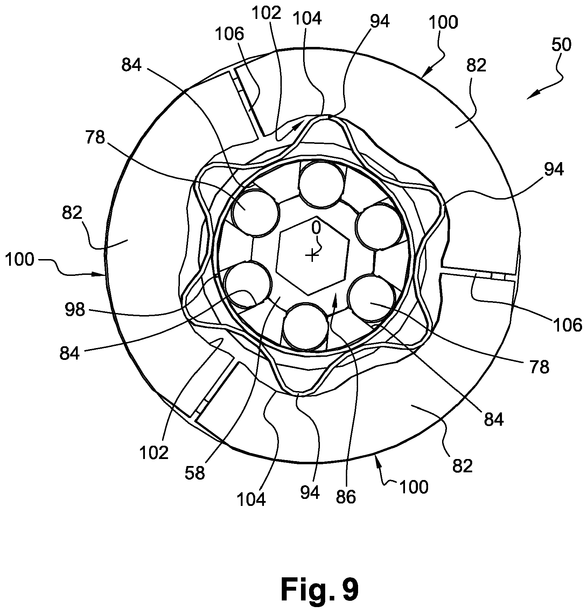

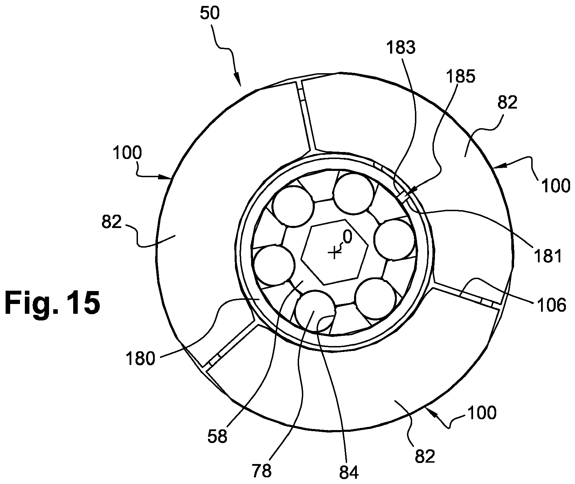

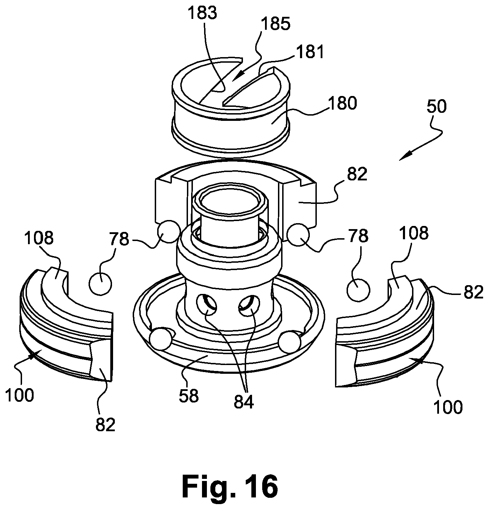

Les figures 15 et 16 sont des vues qui, analogues aux figures 9 et 10 du premier mode de réalisation, illustrent en détails la variante de réalisation des moyens élastiques déformables radialement que comportent les moyens 50 de préhension.

La description qui suit de la variante sera faite par comparaison avec le premier mode de réalisation représenté aux figures 2 à 10, les mêmes chiffres de référence sur les figures 11 à 16 désignent des moyens similaires, analogues ou identiques à ceux décrits précédemment.

Selon cette variante de réalisation, l'anneau 98 et le ressort 80 ondulé du premier mode sont remplacés par un anneau 180 qui, avantageusement réalisé en matière plastique, est déformable élastiquement selon la direction radiale.

Tel que représenté sur les figures 15 et 16, l'anneau 180 est ouvert pour en permettre la déformation en fonctionnement.

L'anneau 180 comporte respectivement un premier bord 181 et un deuxième bord 183 qui en forment les extrémités libres.

De préférence, les bords 181, 183 ne s'étendent pas verticalement de manière rectiligne et définissent entre eux une fente 185 oblique.

La figure 11 représente le dispositif 10 de transport en position de repos, soit à l'état libre.

La pièce 34 d'entraînement de la tige 32 de commande diffère de celle du premier mode de réalisation en ce que la partie radiale de la pièce 34 comportant le pignon 36 s'étend verticalement en dessous du moyeu 38.

Les moyens 54 de liaison sont de type à vis, la partie 33 inférieure amovible de la tige comportant une extrémité libre filetée qui est vissée à l'intérieur d'un trou taraudé complémentaire ménagé dans l'extrémité inférieure de la partie supérieure de la tige 32 de commande montée dans le corps 30 du dispositif 10 de transport.

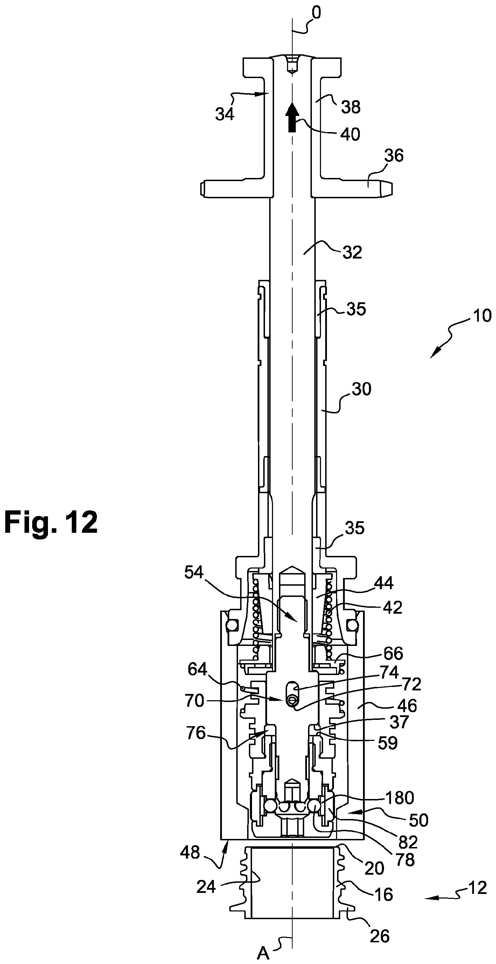

La figure 12 représente la première étape au cours de laquelle la tige 32 de commande est déplacée verticalement vers sa position haute par les moyens 40 d'actionnement.

Les moyens 50 de préhension sont portés par la pièce 60 intermédiaire qui est décalée verticalement vers le bas par rapport à la tige 32 du débattement donné par les premiers moyens 70 de butée, la pièce 60 intermédiaire étant sollicitée vers le bas par son ressort 64 intermédiaire de rappel.

Les moyens 50 de préhension sont escamotés verticalement vers le haut, dans le logement 52 délimité par l'éjecteur 46, grâce à quoi la préforme 12 est susceptible d'être introduite radialement dans la position déterminée de référence par rapport aux moyens 50 de préhension.

Les moyens 50 de préhension occupent la position rétractée, les billes 78 sont sollicitées radialement vers l'intérieur dans leur logement 84 par l'anneau 180.

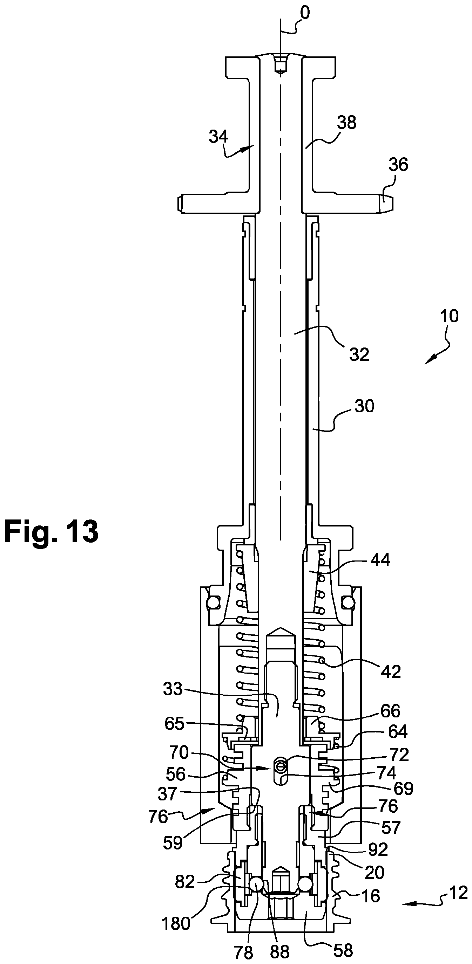

La figure 13 correspond à la figure 6 du premier mode de réalisation décrite précédemment et illustre la préhension du col 16 par les moyens 50 de préhension du dispositif 10 de transport.

Les moyens 40 d'actionnement cessant d'exercer l'effort de traction sur la tige 32, la tige 32 est rappelée verticalement vers le bas par le ressort 42 de rappel.

La descente vers le bas de la tige 32 a pour effet d'introduire les moyens 50 de préhension à l'intérieur du col 16, la pièce 60 intermédiaire est ensuite immobilisée par la butée 92 de commande contre le bord 20 du col 16 et la tige 32 poursuit la descente jusqu'à commander le changement de position des moyens 50 de préhension de la position rétractée vers la position déployée.

La tige 32 comporte une surface 88 tronconique de commande destinée à coopérer avec les billes 78, le déplacement vertical vers le bas de la tige 32 provoquant le déplacement des billes 78 radialement vers l'extérieur à l'encontre de l'anneau 180 élastique, commandant ainsi le changement de position vers la position déployée.

Les billes 78 sollicitées par la tige 32 compriment radialement l'anneau 180 de sorte que l'anneau 180 sollicite radialement vers l'extérieur les secteurs de la bague 82 dont les surfaces 100 externes respectives viennent alors coopérer avec la paroi 24 interne du col 16 de la préforme 12.

La tige 32 atteint sa position basse lorsque les deuxièmes moyens 76 de butée interviennent et les billes 78 sont alors avantageusement reçues dans une gorge 90 de la tige 32 pour assurer un verrouillage de la position déployée.

En effet, la descente de la tige 32 après la venue en butée de la butée 92 de commande provoque la compression du ressort 64 de rappel par l'intermédiaire de la coupelle 66 d'appui.

Les moyens 90 de verrouillage permettent par conséquent d'éviter une libération des moyens 50 de préhension sous l'action de l'effort appliqué par ledit ressort 64 intermédiaire de rappel sur l'épaulement 69 de la pièce 60 intermédiaire.

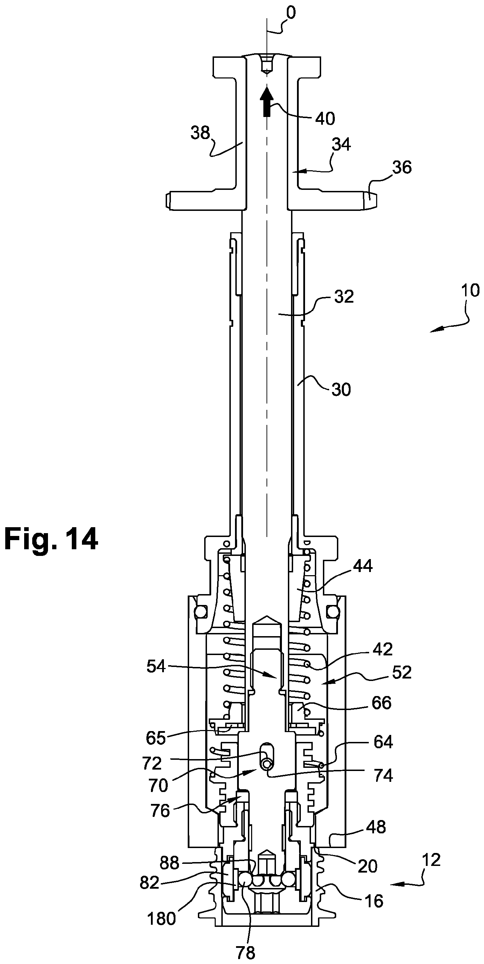

La figure 14 correspond à la figure 7 décrite précédemment et illustre la libération du col 16 de la préforme 12 par les moyens 50 de préhension.

Les moyens 40 d'actionnement sont commandés pour entraîner en déplacement vers le haut la tige 32 qui coulisse dans le corps 30 du dispositif 10 de transport.

Le col 16 de la préforme 12 se déplace alors également jusqu'à ce que le bord 20 viennent en butée contre la face 48 d'appui de l'éjecteur 46, la préforme 12 est alors immobilisée.

Le déplacement vers le haut de la tige 32 se poursuivant s'accompagne d'un déplacement relatif de la pièce 60 intermédiaire dans la limite du débattement déterminé par les premiers moyens 70 de butée, la goupille 72 étant en butée contre le bord inférieur du trou 74 comme illustré sur la figure 14.

En effet, le ressort 64 de rappel sollicite toujours vers le bas la pièce intermédiaire avec un effort d'assistance qui facilite le déverrouillage des billes 78 et le rappel des billes 78 par l'anneau 180 radialement vers l'intérieur, vers la position rétractée des moyens 50 de préhension grâce à quoi la libération du col 16 de la préforme 12 est obtenue.

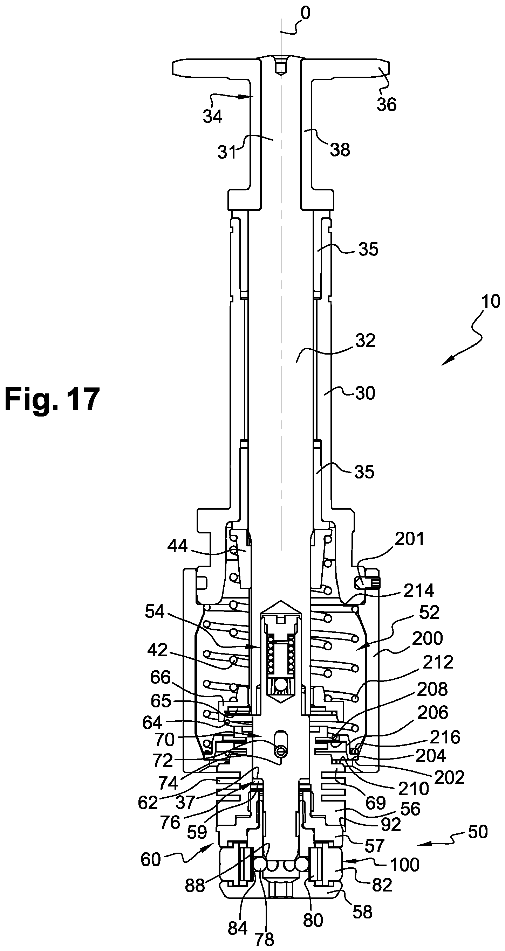

On a représenté aux figures 17 à 22 un deuxième mode de réalisation d'un dispositif 10 de transport d'un corps creux muni d'un col.

La description de ce deuxième mode de réalisation sera avantageusement faite par comparaison avec le premier mode de réalisation représenté notamment aux figures 2 à 10 et décrits précédemment.

Dans ce deuxième mode de réalisation, les moyens 50 de préhension sont identiques à ceux du premier mode de réalisation et le fonctionnement général du dispositif 10 de transport pour réaliser la préhension d'un corps creux par l'intérieur du col puis sa libération est analogue, en particulier lesdites première et deuxième étapes.

Par comparaison avec le premier mode de réalisation, le deuxième mode de réalisation se caractérise par l'absence d'éjecteur 46.

Dans le premier mode de réalisation (comme dans la variante), l'éjecteur 46 et sa face 48 d'appui ont une fonction qui est différente de celle qui était auparavant la leur dans l'état de la technique.

Dans l'état de la technique, la venue en butée du bord du col réalisée contre la face d'appui de l'éjecteur a pour fonction de permettre le changement d'état des moyens de préhension en appliquant, en réaction, un effort sur le col qui est de sens opposé à l'effort de traction exercé par la tige portant les moyens de préhension et déplacée verticalement vers le haut.

Selon l'invention, le changement de position des moyens 50 de préhension étant avantageusement commandé par le déplacement vertical de la tige 32, la venue en butée du bord 20 du col 16 réalisée contre la face 48 d'appui de l'éjecteur 46 a pour fonction de provoquer le déverrouillage de la position déployée dans laquelle les moyens 50 de préhension sont maintenus grâce à la coopération entre les billes 78 et la gorge 90 réalisée à l'extrémité de la partie 33 inférieure de la tige 32.

Dans ce deuxième mode de réalisation, la fonction de déverrouillage en vue de la libération du col 16 de la préforme 12 est réalisée comme décrit ci-après.

La figure 17 représente le dispositif 10 de transport en position de repos, à l'état libre.

Le dispositif 10 comporte un support 200 qui entourant la tige 32 délimite un logement 52 interne et est monté solidairement sur le corps 30 du dispositif 10 de transport.

De préférence, le support 200 est démontable et son extrémité supérieure est par exemple rapportée à fixation par l'intermédiaire de vis 201 sur l'extrémité inférieure du corps 30.

Le support 200 comporte une face 202 supérieure d'orientation radiale qui est destinée à coopérer sélectivement avec une première face 204 inférieure portée par une butée 206 mobile verticalement.

La butée 206 mobile est par exemple formée par une pièce étagée qui est évidée centralement pour permettre intérieurement le passage vertical de la tige 32, de la coupelle 66 et des ressorts 42 et 64 de rappel.

La butée 206 mobile présente globalement une forme en « Z » et comporte une partie supérieure qui s'étend radialement vers l'intérieur et une partie inférieure qui s'étend radialement vers l'extérieur, lesdites parties supérieure et inférieure étant reliée entre elles par une partie intermédiaire ici avantageusement d'orientation verticale.

La première face 204 inférieure est portée par la partie inférieure de la butée 206 et la partie supérieure de la butée 206 porte quand à elle une deuxième face 208 inférieure.

La deuxième face 208 inférieure est destinée à coopérer sélectivement avec une face 210 supérieure qui est portée par l'épaulement 69 contre lequel l'extrémité inférieure du ressort 64 intermédiaire de rappel verticalement vers le bas de la pièce 60 intermédiaire.

Plus précisément, l'épaulement 69 est solidaire de la partie supérieure 58 de la pièce 60 intermédiaire, partie supérieure 56 comportant les ailettes 62 de refroidissement.

Les première et deuxième faces 204, 208 inférieures de la butée 206 mobile sont destinées à coopérer respectivement avec la face 202 du support et la face 210 de la pièce 60 intermédiaire.

La butée 206 est montée mobile à l'encontre d'un ressort 212 de rappel qui sollicite la butée 206 verticalement vers le bas.

L'extrémité supérieure du ressort 212 de rappel de la butée 206 vers le bas est en appui sur une face 214 portée par le corps 30 du dispositif 10 de transport et l'extrémité inférieure du ressort 212 est en appui sur la butée 206.

L'extrémité inférieure du ressort 212 de rappel est en appui sur une face 216 supérieure portée par la partie inférieure radialement à l'extérieur de la butée 206 et qui est à l'opposé verticalement de la première face 204 inférieure.

Tel que représenté sur la figure 17, le dispositif 10 de transport étant en position de repos, la butée 206 est sollicitée verticalement vers le bas par l'extrémité inférieure du ressort 212 de rappel dont l'extrémité supérieure est en appui contre la face 214 du corps 30.

La butée 206 mobile est en butée vers le bas contre le support 200 et est alors immobilisée verticalement vers le haut par l'effort appliqué par le ressort 212.

La première face 204 inférieure de la butée 206 est en appui contre la face 202 supérieure du support 200.

La deuxième face 208 inférieure de la butée 206 n'est pas en appui contre la face 210 supérieure portée par l'épaulement 69 de la pièce 60 intermédiaire et il existe un jeu vertical entre lesdites faces 208 et 210.

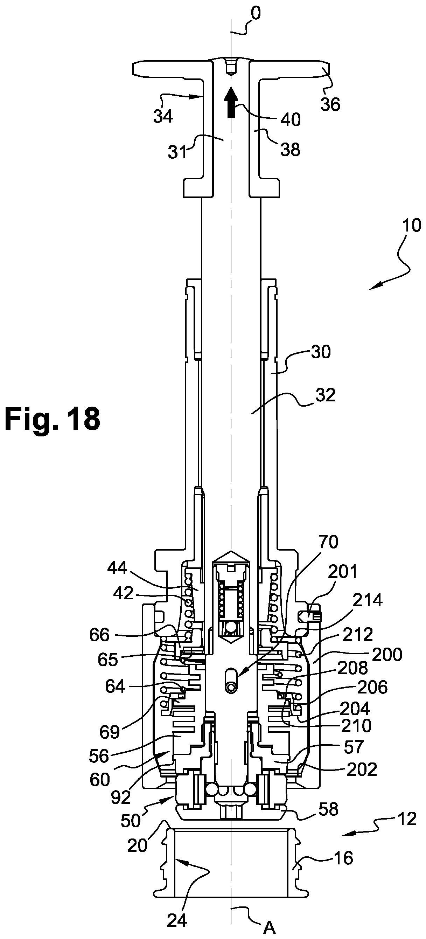

La figure 18 représente le dispositif 10 de transport dans une première position de fonctionnement qui est obtenue à partir de la position de repos de la figure 17 après une première étape.

Lors de la première étape, les moyens 40 d'actionnement représentés schématiquement par une flèche sont commandés pour agir sur le moyeu 38 de la pièce 34 d'entraînement afin de tirer sur la tige 32 pour la déplacer verticalement vers le haut.

Tel que décrit précédemment en référence à la figure 6 pour le premier mode de réalisation, la première étape a pour conséquence l'escamotage verticalement vers le haut des moyens 50 de préhension, ce qui libère l'espace pour l'introduction radiale de la préforme 12 afin de l'amener dans ladite position de référence déterminée dans laquelle son col 16 est aligné verticalement avec les moyens 50 de préhension.

Au cours du déplacement verticalement vers le haut de la tige 32, les premiers moyens 70 de butée intervenant, la tige 32 et la pièce 60 intermédiaire portant les moyens 50 de préhension sont déplacées ensemble verticalement vers le haut.

La pièce 60 intermédiaire entraîne alors également la butée 206 mobile verticalement vers le haut, la première face 204 inférieure de la butée 206 cesse de coopérer avec la face 202 supérieure du support 200.

La face 210 supérieure portée par l'épaulement 69 de la pièce 60 intermédiaire vient en contact avec la deuxième face 208 inférieure de la butée 206 de sorte que le jeu vertical qui existait auparavant entre elles est annulé.

La butée 206 est entraînée en déplacement verticalement vers le haut par la pièce 60 intermédiaire, à l'encontre du ressort 212 de rappel qui est comprimé.

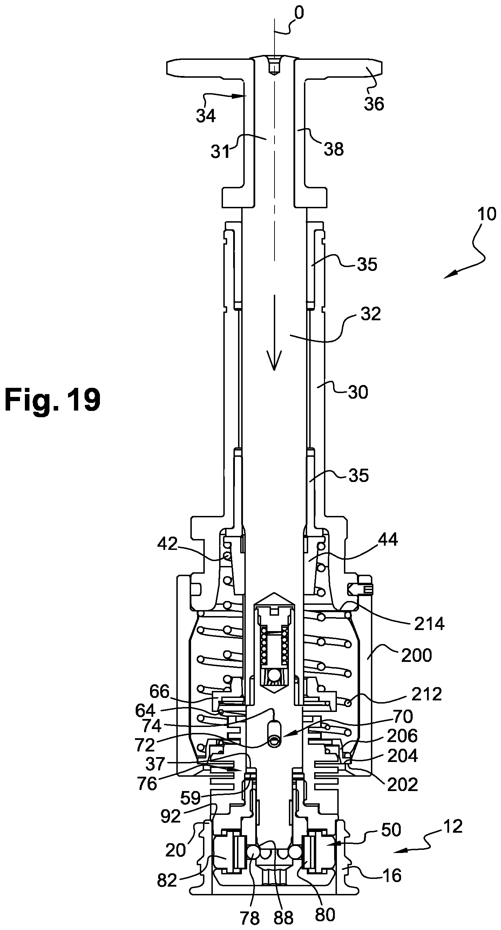

Lors de la deuxième étape représentée à la figure 19, la descente vers le bas de la tige 32 s'effectue sous l'action de l'effort de rappel du ressort 42 de rappel de la tige 32.

La pièce 60 intermédiaire vient en butée contre le bord 20 du col 16 par l'intermédiaire de la butée 92 de commande portée par son entretoise 57, les moyens 50 de préhension sont alors introduits verticalement à l'intérieur du col 16 et en position rétractée.

La butée 206 mobile est revenue dans sa position précédente, à savoir en appui contre le support 200, sa première face 204 inférieure coopérant avec la face 202 supérieure du support 200.

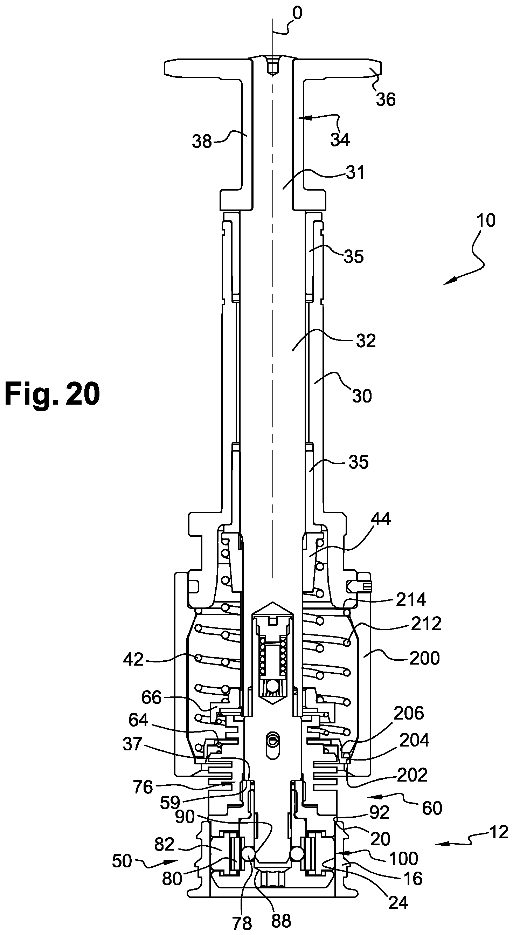

Sur la figure 19, la tige 32 de commande n'a pas encore atteint sa position basse représentée à la figure 20, il existe un jeu vertical au niveau des deuxièmes moyens 76 de butée intervenant entre la tige 32 et la pièce 60 intermédiaire.

Tel qu'illustré par la figure 20, lorsque la tige 32 de commande achève sa descente pour atteindre la position basse, la tige 32 commande alors le changement de position des moyens 50 de préhension de la position rétractée vers la position déployée par coopération entre la surface 88 de commande, ici tronconique, portée par la tige 32 et les billes 78.

Plus précisément, la course de descente de la tige 32 s'achève lorsque les billes 78 pénètrent dans la gorge 90 de la tige 32 destinée à verrouiller les moyens 50 de préhension dans la position déployée.

La libération s'effectue en commandant les moyens 40 d'actionnement pour exercer un effort de traction sur la tige 32 et la déplacer verticalement vers le haut.

Lors du déplacement vers le haut, la tige 32 entraîne avec elle la pièce 60 intermédiaire et la préforme 12 dont le col 16 est tenu par les moyens 50 de préhension verrouillé en position déployée.

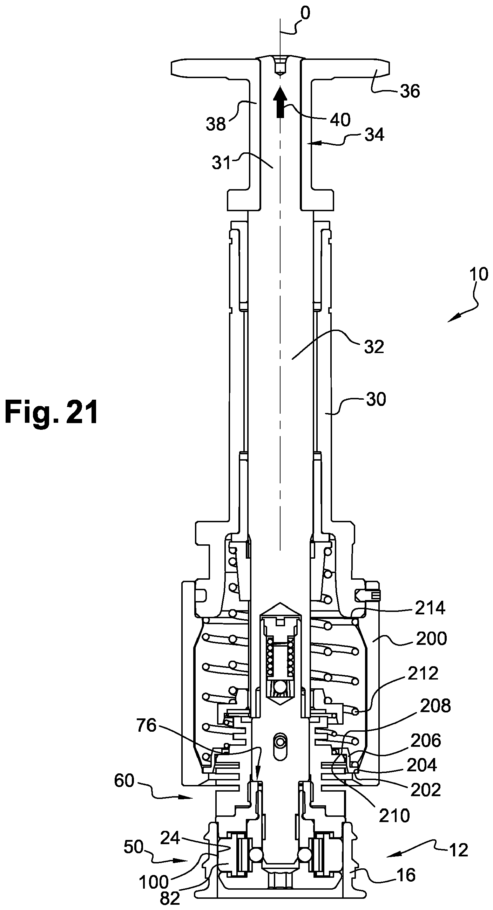

Tel qu'illustré sur la figure 21, la pièce 60 intermédiaire se déplace verticalement vers le haut par rapport à la butée 206 qui demeure dans la position occupée précédemment à la figure 20 et déterminée par coopération entre sa première face 204 inférieure avec la face 202 supérieure du support 200.

Par comparaison entre les figures 20 et 21, on peut voir que le déplacement relatif entre la pièce 60 intermédiaire et la butée 206 provoque l'annulation du jeu vertical, la face 210 supérieure de la pièce 60 intermédiaire vient en effet coopérer avec la deuxième face 208 inférieure de la butée 206.

Le ressort 64 de rappel sollicite verticalement vers le bas la pièce 60 intermédiaire, soit dans un sens opposé à celui de la tige 32 que les moyens 40 d'actionnement déplacent vers le haut.

Le fonctionnement reste identique à celui du premier mode de réalisation, le ressort 64 de rappel restitue l'énergie emmagasinée précédemment par compression au moment de la descente de la tige 32 vers le bas et l'effort de rappel appliqué par le ressort 64 provoque un mouvement relatif entre la tige 32 et la pièce 60 intermédiaire, dans la limite du débattement vertical déterminé par les premiers moyens 70 de butée.

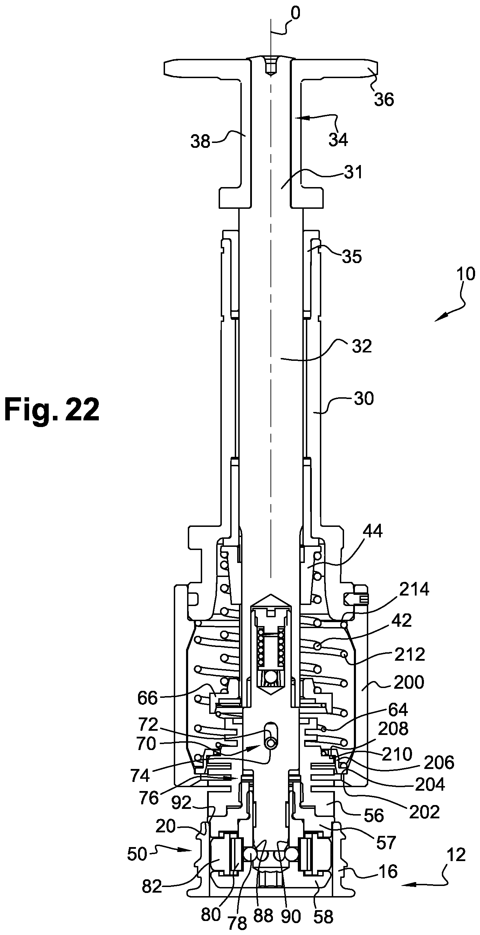

Tel qu'illustré sur la figure 22, la goupille 72 est en butée contre le bord inférieur du trou 74 et la pièce 60 intermédiaire est alors solidaire, liée en déplacement de la tige 32 de commande.

La butée 206 est sollicitée verticalement vers le bas par le ressort 212 de rappel de sorte que l'effort de rappel appliqué par le ressort 212 sur la butée 206 mobile est de sens contraire et s'oppose au déplacement vertical de la pièce 60 intermédiaire.

L'effort supplémentaire appliqué par la butée 206 sur la pièce 60 intermédiaire permet d'obtenir le déverrouillage des moyens 50 de préhension et de libérer les billes 78 hors de la gorge 90 de la tige 32 de commande.

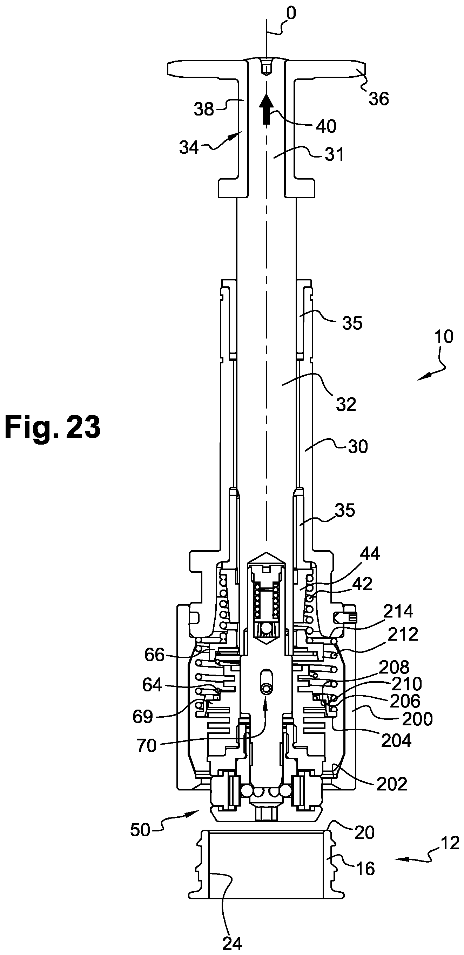

Tel que représenté sur la figure 23, les moyens 50 de préhension occupent à nouveau la position rétractée dans laquelle le diamètre externe de la bague 82 est inférieur au diamètre interne du col 16 de la préforme 12, la préforme 12 n'est alors plus tenue et sa libération par le dispositif 10 de transport achevée.

La tige 32 de commande est déplacée verticalement vers le haut par les moyens 40 d'actionnement jusqu'à atteindre la position haute, le dispositif 10 de transport selon la figure 23 est à nouveau dans sa première position de fonctionnement et, après évacuation de la préforme 12 libérée, le dispositif 10 de transport est apte à assurer la préhension d'une nouvelle préforme 12.

Avantageusement, la commande du déverrouillage des moyens 90 de verrouillage selon ce deuxième mode de réalisation est réalisée sans coopération avec le bord 20 du col 16.

On a déjà expliqué précédemment les conséquences des recherches d'allégement des récipients.

Avantageusement, le deuxième mode de réalisation offre une alternative particulièrement intéressante au premier mode de réalisation lorsque le bord 20 du col 16 est radialement étroit.

En effet, au moins la partie radialement interne du bord 20 doit demeurer libre pour permettre à l'épaulement formant la butée 92 de commande de venir en butée lors de la descente vers le bas de la tige 32 en vue de la préhension ou d'exercer un effort d'assistance lors de la libération de la préforme 12.

Avantageusement, le deuxième mode de réalisation permet également de limiter les contacts avec le bord 20 du col 16 et ce faisant les risques de contamination microbiologiques de ce dernier.

On décrira ci-après un troisième mode de réalisation d'un dispositif 10 de transport d'un corps creux tel qu'une préforme 12 munie d'un col 16.

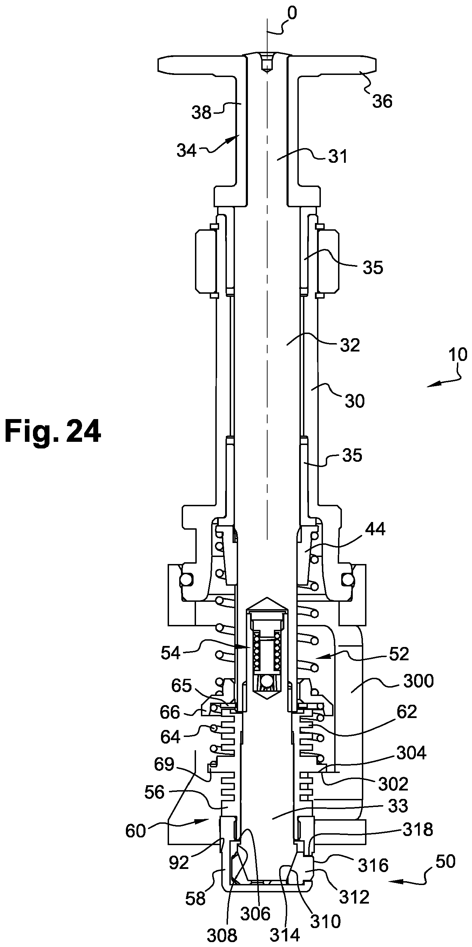

La description qui suit sera faite par comparaison avec le premier mode de réalisation et en référence aux figures 24 à 30.

Ce troisième mode de réalisation du dispositif 10 de transport se caractérise principalement par l'absence d'éjecteur 46 et par des moyens 50 de préhension ne comportant pas d'organe élastique radialement déformable.

Les références identiques à celles du premier mode de réalisation désignent des éléments identiques, analogues ou similaires.

Selon ce troisième mode de réalisation, le dispositif 10 de transport comporte un corps 30 fixe dans lequel coulisse verticalement la tige 32 de commande, respectivement entre une position haute et une position basse.

La tige 32 est déplacée verticalement vers le haut par l'intermédiaire de moyens 40 d'actionnement agissant sélectivement sur la pièce 34 d'entraînement qui est solidaire de l'extrémité 31 supérieure de la tige 32.

La tige 32 est rappelée automatiquement vers le bas par le ressort 42 de rappel. Le ressort 42 est en appui sur la bague 44 et sur la coupelle 66 qui, sollicitée verticalement vers le bas par le ressort 42, est en butée sur l'anneau 65 solidaire de la tige 32 de commande.

De préférence, la tige 32 est réalisée en deux parties et comporte une partie 33 inférieure amovible qui est liée solidairement à la tige 32 par l'intermédiaire de moyens 54 de liaison du type à baïonnette.

Le dispositif 10 de transport comporte une pièce 60 intermédiaire réalisée en deux parties, respectivement une partie 56 supérieure et une partie 58 inférieure qui sont solidaires en déplacement selon la direction verticale.

La partie 56 supérieure comporte des moyens 62 de dissipation thermique formés par exemple par des ailettes.

La partie 56 supérieure est liée verticalement en déplacement à la tige 32 de commande de manière à former un équipage mobile, avec un débattement relatif entre la partie 56 et la tige 32.

La partie 56 supérieure de la pièce 60 intermédiaire est montée mobile verticalement à l'encontre d'un ressort 64 de rappel qui est respectivement en appui à son extrémité supérieure sur la face inférieure de la coupelle 66 et à son extrémité inférieure sur l'épaulement 69 porté par la partie 56.

La pièce 60 intermédiaire est rappelée automatiquement verticalement vers le bas par le ressort 64 intermédiaire de rappel.

Le dispositif 10 de transport comporte un support 300 qui est solidaire du corps 30 et qui comporte une face 302 supérieure de butée pour immobiliser verticalement vers le bas la pièce 60 intermédiaire dont l'épaulement 69 comporte une face 304 inférieure destinée à coopérer avec ladite face 302.

Tel que représenté notamment sur la figure 24, la position inférieure de la partie 56 supérieure de la pièce 60 intermédiaire est déterminée par la venue en butée de la face 304 inférieure de l'épaulement 69 contre la face 302 supérieure du support 300.

La partie 56 supérieure de la pièce 60 intermédiaire comporte à son extrémité inférieure une face 306 inférieure de butée qui est destinée à coopérer avec un épaulement 308 que comporte la tige 32 de commande.

Le débattement relatif entre la tige 32 de commande et la pièce 60 intermédiaire, ici sa partie 56 supérieure, est par conséquent déterminé par des moyens de butée.

La face 302 du support et la face 304 de la pièce 60 déterminent la position relative de la pièce 60 par rapport à la tige 32 de commande lorsque le dispositif 10 de transport est dans la position de repos représentée à la figure 24.

Par comparaison avec le premier mode, lesdites faces 302, 304 assurent à l'état libre la fonction de butée assurée par les premiers moyens 70 de butée formés par la goupille 72 et le trou 74.

La face 306 inférieure de butée de la pièce 60 intermédiaire et l'épaulement 308 constituent déterminent la position de la pièce 60 par rapport à la tige 32 de commande lorsque ladite tige 32 est déplacée verticalement vers le haut.

Par comparaison avec le premier mode, la face 306 et l'épaulement 304 assurent la fonction des deuxièmes moyens 76 de butée lorsque la tige 32 est déplacée verticalement vers le haut.

La tige 32 de commande, ici sa partie 33 inférieure, comporte à son extrémité inférieure une surface 310 tronconique, dite de commande.

Les moyens 50 de préhension sont portés par la partie 58 inférieure de la pièce 60 intermédiaire qui est constituée par une pièce présentant en coupe verticale en forme en "U".

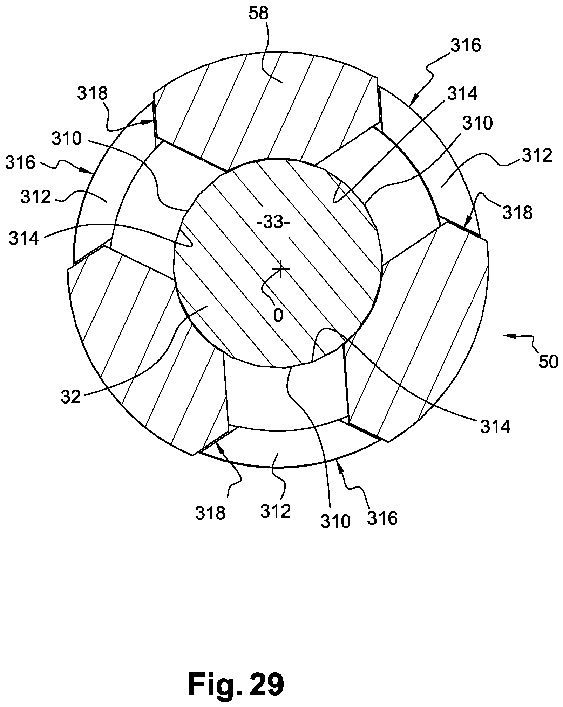

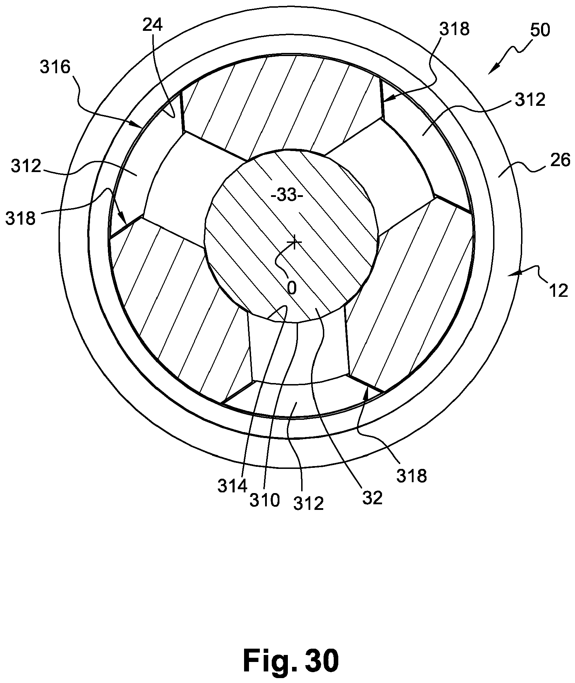

Dans ce troisième mode de réalisation, les moyens 50 de préhension sont formés par au moins deux patins 312, préférentiellement et tel qu'illustré sur les figures 29 et 30 en coupe les trois patins 312 sont répartis circonférentiellement de manière régulière à 120°.

Chaque patin 312 comporte une face 314 interne qui, tronconique, est complémentaire de la surface 310 de commande de la tige 32 avec laquelle ladite face 314 interne coopère en fonctionnement.

La surface 310 de commande présente une pente qui est telle que le diamètre de la partie 33 inférieure de la tige 32 décroît en descendant verticalement vers le bas tandis que, inversement, la face 314 interne d'un patin 312 croît en descendant verticalement vers le bas.

Les pentes de la surface 310 de commande et de la face 314 interne du patin 312 sont inversées de manière à coopérer ensemble suivant un "effet de coin".

Chaque patin 312 comporte une face 316 externe d'orientation verticale destinée à coopérer avec la paroi 24 interne du col 16 pour réaliser la préhension de la préforme 12.

Les patins 312 sont montés mobiles radialement entre une position rétractée et une position déployée dans laquelle chaque patin 312 fait radialement sailli vers l'extérieur à travers une ouverture 318 que comporte la partie 58 inférieure de la pièce 60 intermédiaire.

La figure 24 représente le dispositif 10 de transport en position de repos, à l'état libre.

Dans cette position de repos du dispositif 10, les moyens 50 de préhension s'étendent verticalement en saillie par rapport à l'extrémité inférieure du support 300, hors du logement 52.

Par comparaison avec le premier mode, les moyens 50 de préhension sont en position déployée. En effet, la pièce 60 intermédiaire est immobilisée verticalement par coopération des faces 302 et 304.

La tige 32 de commande est en position basse, la surface 310 de commande sollicite radialement vers l'extérieur chaque patin 312 par l'intermédiaire de leur face 314 et chaque patin 312 fait saillie radialement par rapport à l'ouverture 318.

Dans cette position déployée des moyens 50 de préhension, le diamètre externe qui est déterminé par les faces 316 externes des patins 312, est supérieur au diamètre interne de la paroi 24 interne du col 16.

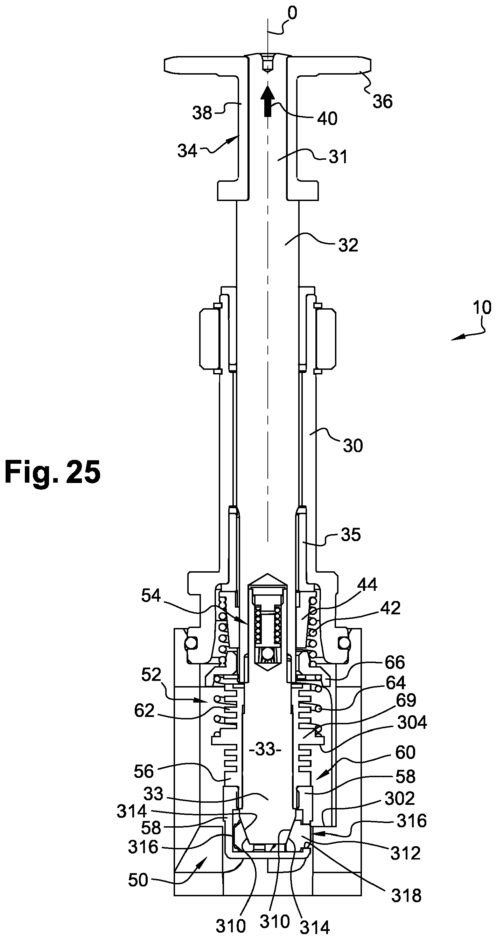

La figure 25 représente le dispositif 10 de transport dans une première position de fonctionnement, position atteinte après une première étape réalisée en vue de la préhension de la préforme par l'intérieur du col 16.

La première étape consiste à commander les moyens 40 d'actionnement pour déplacer verticalement vers le haut, de sa position basse vers sa position haute, la tige 32 de commande.

Pour ce faire, les moyens 40 d'actionnement agissent comme précédemment au premier mode de réalisation sur la pièce 34 d'entraînement solidaire de l'extrémité 31 supérieure de la tige 32.

La tige 32 de commande est tout d'abord la seule entraînée vers le haut jusqu'à ce que le jeu vertical existant entre la face 316 inférieure de butée de la pièce 60 intermédiaire et l'épaulement 308 de la partie 33 inférieure de la tige 32 soit nul.

Le déplacement relatif entre la tige 32 et la pièce 60 intermédiaire commande le changement de position des moyens 50 de préhension qui passent de la position déployée à la position rétractée.

La pièce 60 intermédiaire est ensuite solidaire en déplacement de la tige 32 de commande.

Le déplacement verticalement vers le haut de l'équipage mobile formé par la tige 32 et la pièce 60 intermédiaire a pour effet d'escamoter à l'intérieur du logement 52, en retrait par rapport à l'extrémité inférieure du support 300, les moyens 50 de préhension occupant leur position rétractée.

Tel qu'illustré sur la coupe de la figure 29, les patins 312 sont en position rétractée logés à l'intérieur de la partie 58 inférieure de sorte que le diamètre externe des moyens 50 de préhension correspond alors à celui de la partie 58 inférieure de la pièce 60 intermédiaire.

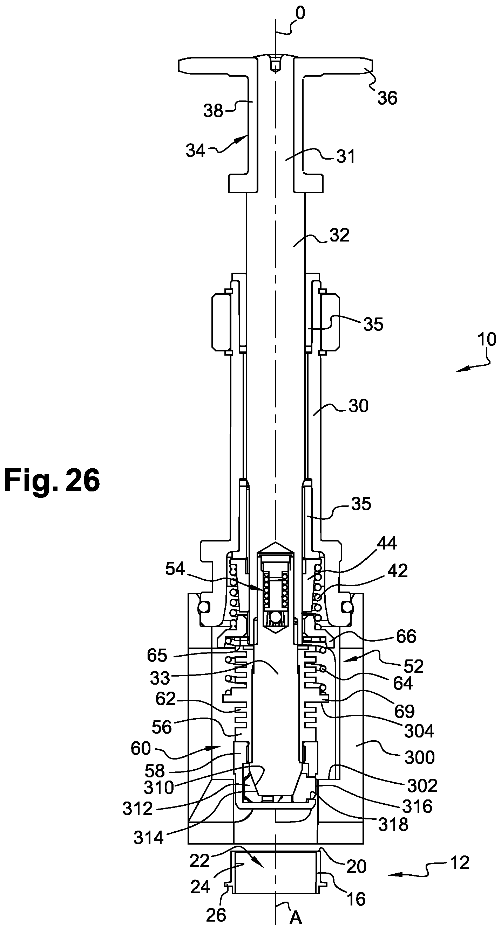

Avantageusement, une préforme 12 est alors susceptible d'être introduite radialement pour occuper une position déterminée de référence, illustrée à la figure 26, dans laquelle le col 16 est aligné verticalement par rapport aux moyens 50 de préhension, à l'aplomb desdits moyens 50 de manière que l'axe A de la préforme soit globalement confondu avec l'axe O du dispositif 10 de transport.

Dans une deuxième étape, les moyens 40 d'actionnement cessent d'exercer leur effort de traction sur la tige 32 qui est alors rappelée automatiquement vers le bas par le ressort 42 de rappel.

Lors de la descente vers le bas, en direction de l'ouverture 22 du col 16, la pièce 60 intermédiaire est immobilisée par le venue en butée de la face 304 inférieure contre la face 302 supérieure du support 300.

La coopération desdites faces 302 et 304 forment une butée de commande qui provoque un déplacement relatif vers le haut de la pièce 60 intermédiaire par rapport à la tige 32.

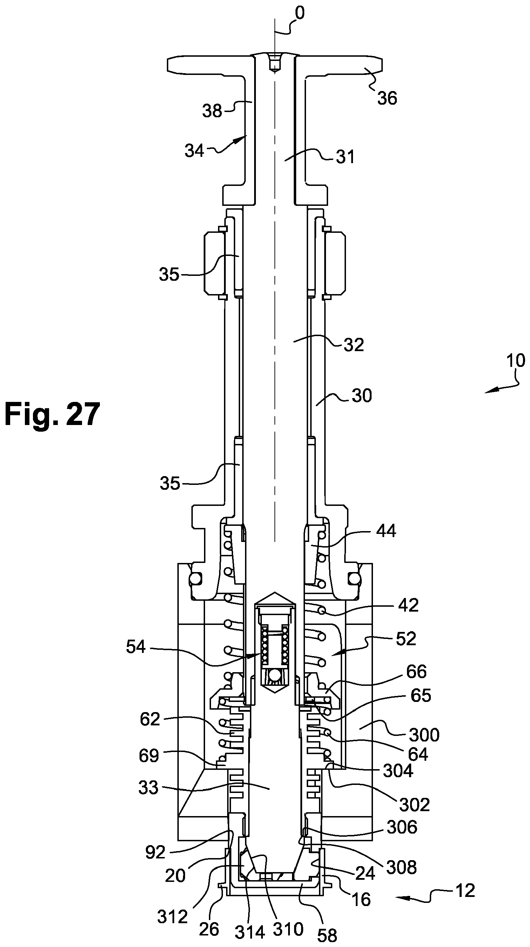

Tel qu'illustré sur la figure 27, le positionnement vertical de la face 302 de butée est déterminée de manière que les moyens 50 de préhension soient introduits à l'intérieur du col 16 lorsque la face 304 inférieure vient en butée contre cette dernière.

Par comparaison avec le premier mode de réalisation, la fonction de butée de commande n'est donc pas ici assurée par coopération entre le bord 20 du col 16 et l'épaulement 92 porté par la partie 58 inférieure de la pièce 60 intermédiaire.

En variante non représentée, la butée de commande de la pièce 60 intermédiaire par rapport à la tige 32 de commande est faite par l'épaulement 92 sur le bord 20 du col 16 et il existe alors un jeu vertical entre la face 302 du support et la face 304 inférieure de la pièce 60 intermédiaire.

Si la pièce 60 intermédiaire est en butée, la tige 32 de commande poursuit sa descente vers le bas grâce au débattement relatif existant entre elles.

La surface 310 de commande de la tige 32 vient coopérer avec la face 314 interne de chaque patin 312 qui, sollicité radialement, se déplace alors de la position rétractée vers la position déployée.

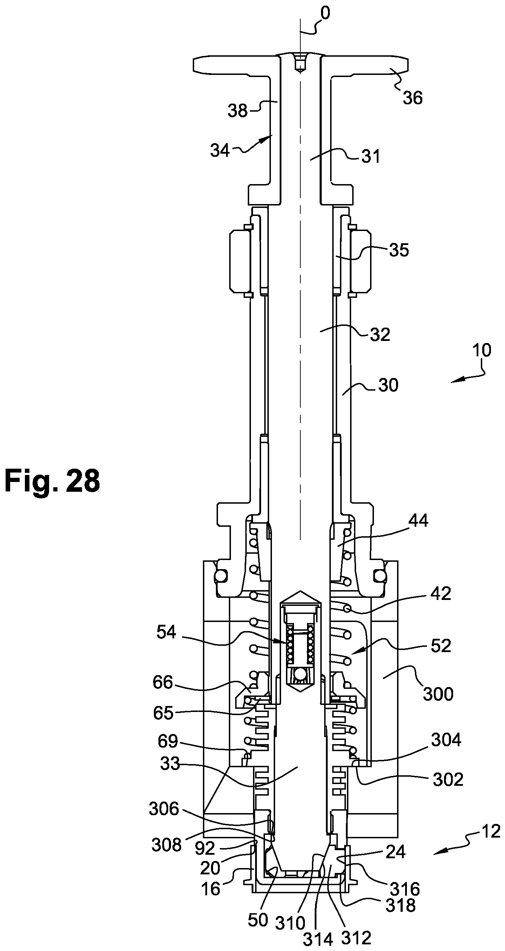

Par comparaison entre les figures 27 et 28, un jeu vertical correspondant apparaît entre la face 306 inférieure et l'épaulement 308.

La face 316 externe de chaque patin 312 exerce alors sur la paroi 24 interne du col 16 radialement en vis-à-vis un effort propre à assurer la préhension de la préforme 12 par l'intérieur du col 16, en laissant l'extérieur du col libre et dégagé.

Avantageusement, la face 316 externe de chaque patin 312 n'est pas plane mais comporte des parties en relief, par exemple au moyen de stries, pour accroître les efforts de friction lors de sa coopération avec la paroi 24 interne du col 16.

Lors de cette deuxième étape, la préforme 12 est maintenue en position jusqu'à sa préhension par les moyens 50 du dispositif 10 de transport, par exemple en étant en appui par l'intermédiaire de sa collerette 26 radiale.

Avantageusement, la coopération entre la surface 310 de commande de la tige 32 et la face 314 interne de chaque patin 312 assure un verrouillage automatique par "effet de coin" des moyens 50 de préhension dans la position déployée.

De préférence, les patins 312 formant les moyens 50 de préhension et la tige 32 de commande sont aimantés avec des polarités opposées de manière à obtenir une force d'attraction magnétique entre les patins 312 et la tige 32.

Avantageusement, les patins 312 sont ainsi rappelés automatiquement vers la position rétractée par la force d'attraction magnétique lorsque la tige 32 de commande est déplacée verticalement vers le haut en vue de la libération.

Avantageusement, la force d'attraction renforce en position déployée l'effort de friction existant entre la surface 310 tronconique de la tige 32 et la face 314 interne des patins 312

## Revendications

1. Dispositif (10) de transport d'un corps (12) creux muni d'un col (16) qui comporte une paroi (24) interne d'orientation verticale et un bord (20) supérieur délimitant circonférentiellement une ouverture (22) d'accès à l'intérieur dudit corps (12) creux, ledit dispositif (10) comportant au moins des moyens (50) de préhension du corps (12) creux par coopération avec la paroi (24) interne du col (16) qui sont montés à l'extrémité libre inférieure d'une tige (32) et liés en déplacement à la tige (32), ladite tige (32) étant montée mobile verticalement entre :
- une position haute dans laquelle les moyens (50) de préhension sont escamotés vers le haut par la tige (32) pour permettre l'introduction radiale du col (16) du corps (12) creux dans une position déterminée de référence par rapport aux moyens (50) de préhension du dispositif (10), et
- une position basse dans laquelle les moyens (50) de préhension coopèrent radialement avec la paroi (24) interne du col (16) pour assurer la préhension du corps (12) creux,
**caractérisé en ce que** les moyens (50) de préhension sont montés mobiles radialement entre :
- une position rétractée dans laquelle les moyens (50) de préhension sont introduits verticalement de haut en bas à l'intérieur du col (16), sans contact avec la paroi (24) interne, et
- une position déployée dans laquelle les moyens (50) de préhension coopèrent avec la paroi (24) interne du col (16),
et **en ce que** le changement de position des moyens (50) de préhension depuis la position rétractée vers la position déployée est commandé par le déplacement vertical vers le bas de la tige (32), de la position haute vers la position basse.

2. Dispositif selon la revendication 1, **caractérisé en ce que** le dispositif comporte un corps (30) par rapport auquel la tige (32), dite de commande, est montée mobile verticalement, au moins un organe (42) de rappel vertical de la tige (32) de commande vers sa position basse et des moyens (40) d'actionnement de la tige (32) de commande vers sa position haute à l'encontre dudit organe (42) de rappel.

3. Dispositif selon l'une des revendications 1 ou 2, **caractérisé en ce que** le dispositif (10) comporte une pièce (60) intermédiaire de support des moyens (50) de préhension qui est liée en déplacement à la tige (32) de commande et qui est montée mobile verticalement par rapport à la tige (32) de commande, et un organe (64) intermédiaire de rappel vers le bas de ladite pièce (60) intermédiaire.

4. Dispositif selon la revendication 3, **caractérisé en ce que** l'organe (42) de rappel de la tige (32) de commande et l'organe (64) intermédiaire de rappel de la pièce (60) intermédiaire sont montés en série par l'intermédiaire d'un élément (66) d'appui et **en ce que** le tarage de l'organe (42) de rappel de la tige (32) de commande est supérieur au tarage de l'organe (64) intermédiaire de rappel de la pièce (60) intermédiaire.

5. Dispositif selon la revendication 3 ou 4, **caractérisé en ce que** le dispositif (10) comporte des moyens (70, 76) de butée qui déterminent un débattement vertical entre la pièce (60) intermédiaire et la tige (32) de commande.

6. Dispositif selon la revendication 5, **caractérisé en ce que** le dispositif (10) comporte au moins des premiers moyens (70) de butée qui interviennent pour lier en déplacement la pièce (60) intermédiaire à la tige (32) de commande lorsque la tige (32) de commande est déplacée verticalement vers le haut.

7. Dispositif selon l'une quelconque des revendications 3 à 6, **caractérisé en ce que** la pièce (60) intermédiaire comporte une butée (92) de commande apte à coopérer avec le bord (20) du col (16) pour provoquer un déplacement relatif vers le haut de la pièce (60) intermédiaire par rapport à la tige (32) de commande, à l'encontre de l'organe (64) intermédiaire de rappel.

8. Dispositif selon la revendication 7, **caractérisé en ce que** l'organe (64) intermédiaire de rappel de la pièce (60) intermédiaire est apte à exercer verticalement vers le bas un effort d'assistance sur le bord (20) du col (16).

9. Dispositif selon l'une quelconque des revendications précédentes, **caractérisé en ce que** le dispositif (10) comporte des moyens (90) de verrouillage des moyens (50) de préhension en position déployée.

10. Dispositif selon les revendications 5 et 9, **caractérisé en ce que** le dispositif (10) comporte au moins des deuxièmes moyens (76) de butée qui, lorsque la tige (32) de commande est déplacée verticalement vers le bas, interviennent entre la pièce (60) intermédiaire en butée et la tige (32) de commande pour positionner verticalement lesdits moyens (90) de verrouillage.

11. Dispositif selon l'une des revendications 3 ou 4, **caractérisé en ce que** la pièce (60) intermédiaire comporte une butée (304) apte à coopérer avec une face (302) d'un support (300) pour provoquer un déplacement relatif vers le haut de la pièce (60) intermédiaire par rapport à la tige (32) de commande, à l'encontre de l'organe (64) intermédiaire de rappel.

12. Dispositif selon l'une quelconque des revendications précédentes, **caractérisé en ce que** le dispositif (10) comporte un éjecteur (46) portant une face (48) d'appui destinée à coopérer avec le bord (20) du col (16) pour immobiliser le col (16) verticalement vers le haut lorsque la tige (32) de commande est déplacée verticalement vers le haut.

13. Dispositif selon l'une quelconque des revendications 3 à 12, **caractérisé en ce que** le dispositif (10) comporte une butée (206) qui, mobile à l'encontre d'un ressort (212) de rappel vers le bas, est apte à coopérer avec la pièce (60) intermédiaire pour immobiliser verticalement ladite pièce (60) intermédiaire lorsque la tige (32) de commande est déplacée verticalement vers le haut.

14. Dispositif selon l'une quelconque des revendications précédentes, **caractérisé en ce que** la tige (32) de commande comporte une surface (88, 310) de commande qui, lors du déplacement vertical de la tige (32) vers le bas, coopère avec les moyens (50) de préhension pour provoquer un déplacement radial des moyens (50) de préhension de la position rétractée vers la position déployée.

15. Dispositif selon l'une quelconque des revendications précédentes, **caractérisé en ce que** les moyens (50) de préhension comportent au moins des moyens (78, 98) de transmission, au moins un organe (80) élastique radialement déformable et des éléments (82) de préhension du corps (12) creux comportant une surface (100) externe destinée à coopérer en position déployée avec la paroi (24) interne du col (16).

16. Dispositif selon les revendications 9 et 14, **caractérisé en ce que** les moyens (78, 98) de transmission comportent au moins des billes (78) qui, lors du changement de position des moyens (50) de préhension vers la position déployée, coopèrent avec la surface (88) de commande de la tige (32) et **en ce que** lesdites billes (78) sont reçues dans une gorge (90) de la tige (32) de commande formant lesdits moyens de verrouillage des moyens (50) de préhension en position déployée.

17. Dispositif selon les revendications 15 et 16, **caractérisé en ce que** ledit au moins un organe élastique radialement déformable est un ressort (80) ondulé destiné à solliciter radialement les éléments (82) de préhension et **en ce que** les moyens (78) de transmission comportent un anneau (98) qui est interposé radialement entre les billes (78) et ledit ressort (80).

18. Dispositif selon la revendication 14, **caractérisé en ce que** les moyens (50) de préhension sont formés par des patins (312) comportant radialement à l'intérieur une face (314) inclinée qui est destinée à coopérer avec la surface (310) de commande de la tige (32) de commande et **en ce que** lesdits patins (312) et la tige (32) de commande sont aimantés pour rappeler automatiquement les patins (312) vers la position rétractée.

## Patentansprüche

1. Vorrichtung (10) zum Transport eines Hohlkörpers (12), der mit einem Hals (16) versehen ist, welcher eine Innenwand (24) mit vertikaler Ausrichtung und einen oberen Rand (20), der eine Zugangsöffnung (22) zum Inneren des Hohlkörpers (12) in Umfangsrichtung begrenzt, aufweist, wobei die Vorrichtung (10) wenigstens Mittel (50) zum Greifen des Hohlkörpers (12) durch Zusammenwirken mit der Innenwand (24) des Halses (16) aufweist, die am unteren freien Ende einer Stange (32) angebracht sind und mit der Stange (32) bewegungsverbunden sind, wobei die Stange (32) vertikal beweglich angebracht ist zwischen:
- einer oberen Position, in welcher die Greifmittel (50) von der Stange (32) nach oben eingezogen sind, um die radiale Einführung des Halses (16) des Hohlkörpers (12) in eine bestimmte Bezugsposition bezüglich der Greifmittel (50) der Vorrichtung (10) zu ermöglichen, und
- einer unteren Position, in welcher die Greifmittel (50) radial mit der Innenwand (24) des Halses (16) zusammenwirken, um das Greifen des Hohlkörpers (12) sicherzustellen,
**dadurch gekennzeichnet, dass** die Greifmittel (50) radial beweglich angebracht sind zwischen:
- einer zurückgezogenen Position, in welcher die Greifmittel (50) vertikal von oben nach unten ins Innere des Halses (16) eingeführt werden, ohne Kontakt mit der Innenwand (24), und
einer gespreizten Position, in welcher die Greifmittel (50) mit der Innenwand (24) des Halses (16) zusammenwirken,
und dadurch, dass die Änderung der Position der Greifmittel (50) von der zurückgezogenen Position in die gespreizte Position durch die vertikale Bewegung der Stange (32) nach unten von der oberen Position in die untere Position gesteuert wird.

2. Vorrichtung nach Anspruch 1, **dadurch gekennzeichnet, dass** die Vorrichtung einen Körper (30), in Bezug auf den die Stange (32), die Steuerstange genannt wird, vertikal beweglich angebracht ist, wenigstens ein Bauteil (42) zum vertikalen Zurückbewegen der Steuerstange (32) in ihre untere Position und Mittel (40) zur Betätigung der Steuerstange (32) in Richtung ihrer oberen Position, entgegen der Wirkung des Bauteils (42) zum Zurückbewegen, aufweist.

3. Vorrichtung nach einem der Ansprüche 1 oder 2, **dadurch gekennzeichnet, dass** die Vorrichtung (10) ein Zwischenstück (60) zur Abstützung der Greifmittel (50), welches mit der Steuerstange (32) bewegungsverbunden ist und welches bezüglich der Steuerstange (32) vertikal beweglich angebracht ist, und ein Zwischenbauteil (64) zum Zurückbewegen des Zwischenstücks (60) nach unten aufweist.

4. Vorrichtung nach Anspruch 3, **dadurch gekennzeichnet, dass** das Bauteil (42) zum Zurückbewegen der Steuerstange (32) und das Zwischenbauteil (64) zum Zurückbewegen des Zwischenstücks (60) über ein Stützelement (66) in Reihe angebracht sind, und dadurch, dass die Kalibrierung des Bauteils (42) zum Zurückbewegen der Steuerstange (32) der Kalibrierung des Zwischenbauteils (64) zum Zurückbewegen des Zwischenstücks (60) übergeordnet ist.

5. Vorrichtung nach Anspruch 3 oder 4, **dadurch gekennzeichnet, dass** die Vorrichtung (10) Anschlagmittel (70, 76) aufweist, welche einen vertikalen Federweg zwischen dem Zwischenstück (60) und der Steuerstange (32) bestimmen.

6. Vorrichtung nach Anspruch 5, **dadurch gekennzeichnet, dass** die Vorrichtung (10) wenigstens erste Anschlagmittel (70) aufweist, welche zum Einsatz kommen, um das Zwischenstück (60) mit der Steuerstange (32) für eine gemeinsame Bewegung zu verbinden, wenn die Steuerstange (32) vertikal nach oben bewegt wird.

7. Vorrichtung nach einem der Ansprüche 3 bis 6, **dadurch gekennzeichnet, dass** das Zwischenstück (60) einen Steueranschlag (92) aufweist, der geeignet ist, mit dem Rand (20) des Halses (16) zusammenzuwirken, um eine relative Bewegung des Zwischenstücks (60) bezüglich der Steuerstange (32) nach oben, entgegen der Wirkung des Zwischenbauteils (64) zum Zurückbewegen, hervorzurufen.

8. Vorrichtung nach Anspruch 7, **dadurch gekennzeichnet, dass** das Zwischenbauteil (64) zum Zurückbewegen des Zwischenstücks (60) geeignet ist, vertikal nach unten eine Unterstützungskraft auf den Rand (20) des Halses (16) auszuüben.

9. Vorrichtung nach einem der vorhergehenden Ansprüche, **dadurch gekennzeichnet, dass** die Vorrichtung (10) Mittel (90) zur Verriegelung der Greifmittel (50) in der gespreizten Position aufweist.

10. Vorrichtung nach den Ansprüchen 5 und 9, **dadurch gekennzeichnet, dass** die Vorrichtung (10) wenigstens zweite Anschlagmittel (76) aufweist, welche, wenn die Steuerstange (32) vertikal nach unten bewegt wird, zwischen dem am Anschlag befindlichen Zwischenstück (60) und der Steuerstange (32) zum Einsatz kommen, um die Verriegelungsmittel (90) vertikal zu positionieren.

11. Vorrichtung nach Anspruch 3 oder 4, **dadurch gekennzeichnet, dass** das Zwischenstück (60) einen Anschlag (304) aufweist, der geeignet ist, mit einer Fläche (302) einer Abstützung (300) zusammenzuwirken, um eine relative Bewegung des Zwischenstücks (60) bezüglich der Steuerstange (32) nach oben, entgegen der Wirkung des Zwischenbauteils (64) zum Zurückbewegen, hervorzurufen.

12. Vorrichtung nach einem der vorhergehenden Ansprüche, **dadurch gekennzeichnet, dass** die Vorrichtung (10) einen Ausstoßer (46) aufweist, der eine Stützfläche (48) trägt, die dazu bestimmt ist, mit dem Rand (20) des Halses (16) zusammenzuwirken, um den Hals (16) vertikal nach oben zu fixieren, wenn die Steuerstange (32) vertikal nach oben bewegt wird.

13. Vorrichtung nach einem der Ansprüche 3 bis 12, **dadurch gekennzeichnet, dass** die Vorrichtung (10) einen Anschlag (206) aufweist, welcher, entgegen einer Rückholfeder (212) nach unten beweglich, geeignet ist, mit dem Zwischenstück (60) zusammenzuwirken, um das Zwischenstück (60) vertikal zu fixieren, wenn die Steuerstange (32) vertikal nach oben bewegt wird.

14. Vorrichtung nach einem der vorhergehenden Ansprüche, **dadurch gekennzeichnet, dass** die Steuerstange (32) eine Steuerfläche (88, 310) aufweist, welche während der vertikalen Bewegung der Stange (32) nach unten mit den Greifmitteln (50) zusammenwirkt, um eine radiale Bewegung der Greifmittel (50) von der zurückgezogenen Position in die gespreizte Position hervorzurufen.

15. Vorrichtung nach einem der vorhergehenden Ansprüche, **dadurch gekennzeichnet, dass** die Greifmittel (50) wenigstens Übertragungsmittel (78, 98), wenigstens ein radial verformbares elastisches Bauteil (80) und Elemente (82) zum Greifen des Hohlkörpers (12), die eine äußere Fläche (100) aufweisen, die dazu bestimmt ist, in der gespreizten Position mit der Innenwand (24) des Halses (16) zusammenzuwirken, umfassen.

16. Vorrichtung nach den Ansprüchen 9 und 14, **dadurch gekennzeichnet, dass** die Übertragungsmittel (78, 98) wenigstens Kugeln (78) aufweisen, welche während der Positionsänderung der Greifmittel (50) in die gespreizte Position mit der Steuerfläche (88) der Stange (32) zusammenwirken, und dadurch, dass die Kugeln (78) in einer Rille (90) der Steuerstange (32) aufgenommen werden, welche die Mittel zur Verriegelung der Greifmittel (50) in der gespreizten Position bildet.

17. Vorrichtung nach den Ansprüchen 15 und 16, **dadurch gekennzeichnet, dass** das wenigstens eine radial verformbare elastische Bauteil eine Wellenfeder (80) ist, die dazu bestimmt ist, die Greifelemente (82) radial zu belasten, und dadurch, dass die Übertragungsmittel (78) einen Ring (98) umfassen, welcher radial zwischen den Kugeln (78) und der Feder (80) angeordnet ist.

18. Vorrichtung nach Anspruch 14, **dadurch gekennzeichnet, dass** die Greifmittel (50) von Gleitbacken (312) gebildet werden, welche radial innen eine geneigte Fläche (314) aufweisen, die dazu bestimmt ist, mit der Steuerfläche (310) der Steuerstange (32) zusammenzuwirken, und dadurch, dass die Gleitbacken (312) und die Steuerstange (32) magnetisch sind, um die Gleitbacken (312) automatisch in die zurückgezogene Position zurückzubewegen.

## Claims

1. Device (10) for transporting a hollow body (12) provided with a neck (16) that comprises an inner, vertically oriented wall (24) and an upper rim (20) circumferentially delimiting an access opening (22) to the interior of said hollow body (12), said device (10) comprising at least means (50) for gripping the hollow body (12) by engagement with the inner wall (24) of the neck (16), which are mounted on the lower, free end of a stem (32) and are displaceably connected to the stem (32), said stem (32) being mounted so as to be able to move vertically between:
- an upper position in which the gripping means are retracted upwards by the stem (32) so as to allow the neck (16) of the hollow body (12) to be introduced radially into a determined reference position with respect to the gripping means (50) of the device (10), and
- a lower position in which the gripping means (50) engage radially with the inner wall (24) of the neck (16) so as to grip the hollow body (12), **characterized in that** the gripping means (50) are mounted so as to be able to move radially between:
- a retracted position in which the gripping means (50) are introduced vertically downwards into the neck (16) without making contact with the inner wall (24), and
- a deployed position in which the gripping means (50) engage with the inner wall (24) of the neck (16),
and **in that** the change of position of the gripping means (50) from the retracted position to the deployed position is controlled by the vertical, downward displacement of the stem (32), from the upper position to the lower position.

2. Device according to Claim 1, **characterized in that** the device comprises a body (30) with respect of which the stem (32), referred to as the control stem, is mounted so as to be able to move vertically, at least one vertical return member (42) for returning the control stem (32) towards its lower position and means (40) for actuating the control stem (32) towards its upper position counter to said return member (42).

3. Device according to either of Claims 1 and 2, **characterized in that** the device (10) comprises an intermediate part (60) for supporting the gripping means (50), which is kinematically linked to the control stem (32) and is mounted so as to be able to move vertically with respect to the control stem (32), and an intermediate member (64) for returning said intermediate part (60) downwards.

4. Device according to Claim 3, **characterized in that** the return member (42) for the control stem (32) and the intermediate return member (64) for the intermediate part (60) are mounted in series via the intermediary of a pressure element (66), and **in that** the zero point of the return member (42) for the control stem (32) is above the zero point of the intermediate return member (64) for the intermediate part (60).

5. Device according to Claim 3 or 4, **characterized in that** the device (10) comprises stop means (70, 76) which define a vertical travel between the intermediate part (60) and the control stem (32).

6. Device according to Claim 5, **characterized in that** the device (10) comprises at least first stop means (70) which intervene to kinematically link the intermediate part (60) to the control stem (32) when the control stem (32) is displaced vertically upwards.

7. Device according to any one of Claims 3 to 6, **characterized in that** the intermediate part (60) comprises a control stop (92) that is able to engage with the rim (20) of the neck (16) so as to cause the intermediate part (60) to move upwards relative to the control stem (32), counter to the intermediate return member (64).

8. Device according to Claim 7, **characterized in that** the intermediate return member (64) of the intermediate part (60) is able to exert a vertically downward assistive force on the rim (20) of the neck (16).

9. Device according to any one of the preceding claims, **characterized in that** the device (10) comprises means (90) for locking the gripping means (50) in the deployed position.

10. Device according to Claims 5 and 9, **characterized in that** the device (10) comprises at least second stop means (76) which, when the control stem (32) is moved vertically downwards, intervene between the intermediate part (60) that is in abutment and the control stem (32), so as to vertically position said locking means (90).

11. Device according to either of Claims 3 and 4, **characterized in that** the intermediate part (60) comprises a stop (304) that is able to engage with a face (302) of a support (300) so as to cause the intermediate part (60) to move upwards relative to the control stem (32), counter to the intermediate return member (64).

12. Device according to any one of the preceding claims, **characterized in that** the device (10) comprises an ejector (46) having a bearing face (48) that is designed to engage with the rim (20) of the neck (16) so as to immobilize the neck (16) in the vertical upwards direction when the control stem (32) is displaced vertically upwards.

13. Device according to any one of Claims 3 to 12, **characterized in that** the device (10) comprises a stop (206) which is able to move counter to a downward-biased return spring (212) and is able to engage with the intermediate part (60) so as to immobilize said intermediate part (60) in the vertical direction when the control stem (32) is displaced vertically upwards.

14. Device according to any one of the preceding claims, **characterized in that** the control stem (32) comprises a control surface (88, 310) which, when the stem (32) is displaced vertically downwards, engages with the gripping means (50) so as to cause the gripping means (50) to move radially from the retracted position to the deployed position.

15. Device according to any one of the preceding claims, **characterized in that** the gripping means (50) comprise at least transmission means (78, 98), at least one radially deformable elastic member (80) and elements (82) for gripping the hollow body (12), comprising an outer surface (100) designed to engage, in the deployed position, with the inner wall (24) of the neck (16).

16. Device according to Claims 9 and 14, **characterized in that** the transmission means (78, 98) comprise at least balls (78) which, when the gripping means (50) change position towards the deployed position, engage with the control surface (88) of the stem (32), and **in that** said balls (78) are received in a channel (90) of the control stem (32) forming said means for locking the gripping means (50) in the deployed position.

17. Device according to Claims 15 and 16, **characterized in that** said at least one radially deformable elastic member is a wave spring (80) that is designed to radially load the gripping elements (82), and **in that** the transmission means (78) comprise a ring (98) that is interposed radially between the balls (78) and said spring (80).

18. Device according to Claim 14, **characterized in that** the gripping means (50) consist of shoes (312) comprising, radially internally, an inclined face (314) that is designed to engage with the control surface (310) of the control stem (32), and **in that** said shoes (312) and the control stem (32) are magnetized so as to automatically return the shoes (312) to the retracted position.
